# EUROPEAN PATENT SPECIFICATION

(11) **EP 3 724 466 B1**
(45) Date of publication and mention of the grant of the patent: **07.06.2023**
(21) Application number: 18889209.5
(22) Date of filing: 13.12.2018
(51) Int. Cl.: F01M 1/08, F16N 7/38, F16N 7/34, F16N 13/04, F16N 13/06

(54) **LARGE SLOW-RUNNING TWO-STROKE ENGINE AND METHOD OF LUBRICATING SUCH ENGINE, AS WELL AS AN INJECTOR WITH AN ELECTRIC PUMPING SYSTEM FOR SUCH ENGINE AND METHOD**
GROSSER LANGSAM LAUFENDER ZWEITAKTMOTOR UND VERFAHREN ZUR SCHMIERUNG EINES SOLCHEN MOTORS SOWIE EINE EINSPRITZDÜSE MIT EINEM ELEKTRISCHEN PUMPSYSTEM FÜR EINEN SOLCHEN MOTOR UND VERFAHREN
GROS MOTEUR LENT À DEUX TEMPS ET PROCÉDÉ DE LUBRIFICATION D'UN TEL MOTEUR, ET INJECTEUR DOTÉ DE SYSTÈME DE POMPAGE ÉLECTRIQUE POUR UN TEL MOTEUR ET PROCÉDÉ ASSOCIÉ

(30) Priority: 13.12.2017 DK PA201770937
(43) Date of publication of application: 21.10.2020
(73) Proprietor: Hans Jensen Lubricators A/S, 9560 Hadsund (DK)
(72) Inventor: BAK, Peer, 9300 Sæby (DK)
(74) Representative: Patrade A/S
(86) International application number: PCT/DK2018/050354
(87) International publication number: WO 2019/114904

(56) References cited:
- EP-A1- 2 177 720
- EP-A1- 2 177 720
- EP-A2- 1 001 167
- EP-A2- 1 426 571
- EP-A2- 1 426 571
- EP-B1- 1 328 709
- EP-B1- 1 328 709
- DE-A1- 10 220 015
- DE-A1-102013 002 744
- US-A1- 2004 129 237
- US-A1- 2004 129 237

## Description

### FIELD OF THE INVENTION

The present invention relates to a large slow-running two-stroke engine and a method of lubricating such engine, as well as an injector for such engine and method.

### BACKGROUND OF THE INVENTION

Due to the focus of on environmental protection, efforts are on-going with respect reduction of emissions from marine engines. This also involves the steady optimization of lubrication systems for such engines, especially due to increased competition. One of the economic aspects with increased attention is a reduction of oil consumption, not only because of environmental protection but also because this is a significant part of the operational costs of ships. A further concern is proper lubrication despite reduced lubricant volume because the longevity of diesel engines should not be compromised by the reduction of oil consumption. Thus, there is a need for steady improvements with respect to lubrication.

For lubricating of large slow-running two-stroke marine diesel engines, several different systems exist, including injection of lubrication oil directly onto the cylinder liner or injection of oil quills to the piston rings. An example of a diesel engine is disclosed in EP2177720A1.

Lubrication systems for various types of engines and components therefore are disclosed in US20040/129237A1, US2002/0144865A1, EP0953764A1, EP1001167A2, US2011/0083634A1. A fuel injection pump is disclosed in US2010/0300407A1.

An example of a lubricant injector for a marine engine is disclosed in EP1767751, in which a non-return valve is used to provide the lubricant access to the nozzle passage inside the cylinder liner. The non-return valve comprises a reciprocating spring-pressed ball in a valve seat just upstream of the nozzle passage, where the ball is displaced by pressurised lubricant. The ball valve is a traditional technical solution, based on a principle dating back to the start of the previous century, for example as disclosed in GB214922 from 1923.

European patent application EP14265571A2 discloses a lubricant injector that comprises an electrically driven inlet valve system, which is opening and closing for pilot pressure behind a valve needle in order to control the opening and closing time of the valve at the nozzle for lubricant injection.

An alternative and relatively new lubrication method, compared to traditional lubrication, is commercially called Swirl Injection Principle (SIP). It is based on injection of a spray of atomized droplets of lubricant into the scavenging air swirl inside the cylinder. The helically upwards directed swirl results in the lubricant being pulled towards the Top Dead Centre (TDC) of the cylinder and pressed outwards against the cylinder wall as a thin and even layer. This is explained in detail in international patent applications WO2010/149162 and WO2016/173601. The injectors comprise an injector housing inside which a reciprocating valve member is provided, typically a valve needle. The valve member, for example with a needle tip, closes and opens the lubricant's access to a nozzle aperture according to a precise timing. In current SIP systems, a spray with atomized droplets is achieved at a pressure of, typically, 35-40 bars, which is substantially higher than the oil pressure of less than 10 bars that are used for systems working with compact oil jets that are introduced into the cylinder. In some types of SIP valves, the high pressure of the lubricant is also used to move a spring-loaded valve member against the spring force away from the nozzle aperture such that the highly pressurised oil is released therefrom as atomized droplets. The ejection of oil leads to a lowering of the pressure of the oil on the valve member, resulting in the valve member returning to its origin and remaining there until the next lubricant cycle where highly pressurized lubricant is supplied to the lubricant injector again.

In such large marine engines, a number of injectors are arranged in a circle around the cylinder, and each injector comprises one or more nozzle apertures at the tip for delivering lubricant jets or sprays into the cylinder from each injector. Examples of SIP lubricant injector systems in marine engines are disclosed in international patent applications WO2002/35068, WO2004/038189, WO2005/124112, WO2010/149162, WO2012/126480, WO2012/126473, WO2014/048438, and WO2016/173601.

For SIP injection, a precisely controlled timing is essential in addition to the objective of minimizing oil consumption. For this reason, SIP systems are specially designed for quick reactive response during injection cycles.

WO02/35068 discloses an injector that contains a pumping system, in which a reciprocal plunger member is moved forwards towards the nozzle in an injection phase, for thereby causing pressure rise in a predetermined lubricant volume inside the injector and for pumping this predetermined lubricant volume through the nozzle aperture. This pumping system is activated by high pressure oil which is fed to the injector from the controller. The controller feeds the high pressure oil centrally to all injectors. Each injector has a controllable motor for adjustment of the stroke length for the reciprocal plunger. Such a system is simple in that it regulates the injection centrally by the high pressure oil delivery from the controller the adjustment works identical for all injectors with respect to the timing and frequency for the injection. However, such system has a lack of flexibility with respect to individual adjustment of the timing and frequency for injection by the individual injector.

In general, despite these apparent advantages of SIP lubrication systems and advanced dosing systems for injectors in general, a steady motivation for improvements exists. Especially, there is a desire for flexibility with respect to lubricant injection timing and frequency.

### DESCRIPTION / SUMMARY OF THE INVENTION

It is therefore the objective of the invention to provide an improvement in the art. A particular objective is to provide a better speed and volume control of lubricant ejection by the injector. Especially, it is the objective to improve lubrication with SIP valves in a large slow-running two-stroke engine. These objectives are achieved by a large slow-running two-stroke engine with a plurality of injectors, a method for lubricating such an engine and with an injector for such engine and method as set forth in the following.

The large slow-running two-stroke engine comprises a cylinder with a reciprocal piston inside and with a plurality of injectors distributed along a perimeter of the cylinder for injection of lubricant into the cylinder at various positions on the perimeter during injection phases. For example, the large slow-running two-stroke engine is a marine engine or a large engine in power plants. Typically, the engine is burning diesel or gas fuel.

The engine further comprises a controller. The controller is configured for controlling the amount and timing of the lubricant injection by the injectors during an injection phase. Optionally, also the injection frequency is controlled by the controller. For precise injection, it is an advantage if the controller is electronically connected to a computer or comprises a computer, where the computer is monitoring parameters for the actual state and motion of the engine. Such parameters are useful for the control of optimized injection. Optionally, the controller is provided as an add-on system for upgrade of already existing engines. A further advantageous option is a connection of the controller to a Human Machine Interface (HMI) which comprises a display for surveillance and input panel for adjustment and/or programming of parameters for injection profiles and optionally the state of the engine. Electronic connections are optionally wired or wireless or a combination thereof.

The term "injector" is used for an injection valve system comprising a housing with a lubricant inlet and one single injection nozzle with a nozzle aperture as a lubricant outlet and with a movable member inside the housing, which opens and closes access for the lubricant to the nozzle aperture. Although, the injector has a single nozzle that extends into the cylinder through the cylinder wall, when the injector is properly mounted, the nozzle itself, optionally, has more than a single aperture. For example, nozzles with multiple apertures are disclosed in WO2012/126480.

The term "injection phase" is used for the time during which lubricant is injected into the cylinder by an injector. The term "idle phase" is used for the time between injection phases. The term "injection cycle" is used for the time it takes to start an injection sequence and until the next injection sequence starts. For example, the injection sequence comprises a single injection, in which case the injection cycle is measured from the start of the injection phase to the start of the next injection phase. The term "timing" of the injection is used for the adjustment of the start of the injection phase by the injector relatively to a specific position of the piston inside the cylinder. The term "frequency" of the injection is used for the number of repeated injections by an injector per revolution of the engine. If the frequency is unity, there is one injection per revolution. If the frequency is 1/2, there is one injection per every two revolutions. This terminology is in line with the above mentioned prior art.

In a practical embodiment, the housing of the injector comprises a base with a lubricant inlet port for receiving lubricant and comprises a flow chamber, typically a rigid cylindrical flow chamber, which rigidly connects the base with the nozzle. The flow chamber is hollow and, thus, allows lubricant to flow inside the flow chamber from the base to the nozzle. When the injector is mounted, the flow chamber extends through the cylinder wall of the engine so that the nozzle is held rigidly inside the cylinder by the flow chamber. Due to the base being provided at the opposite end of the flow chamber, it is typically located on or at the outer side of the cylinder wall. For example, the injector comprises a flange at the base for mounting onto the outer cylinder wall.

In order to fully understand the invention, it is pointed out that it has been discovered that lubricant conduits of a substantial length from a pumping system to the cylinder with the plurality of injectors introduce imprecision of the system. Long conduits tend to expand and retract slightly when being exposed to highly pressurised lubricant, which leads to slight uncertainties in timing and volume of injected lubricant. Furthermore, the lubricant is subject to minute compression and expansion during an injection cycle, which adds to the effect. Although, this effect is small, it introduces errors in the range of milliseconds for the injection, which is substantial in comparison to the short SIP injection time, which can be as little as 10 milliseconds or even below 1 millisecond. Such effect of imprecise timing has substantial influence on SIP lubrication systems due to the high lubricant pressure and the short injection periods. Also, it is noticed that the injection amount is typically regulated by the time length in which pressurised oil is supplied to the nozzle in an injection cycle, in which case, uncertainty factors that affect a precise timing should be minimised, if not eliminated. Improvement with respect to the injection is achieved with a system and method as described in the following with various embodiments and details.

In order to solve the problem and achieve the objective of providing a better speed and volume control of lubricant ejection by the injector, each injector comprises an internal electrical pumping system for pressurising lubricant for ejection. The pumping system comprises a reciprocal plunger member inside the injector housing which during its electrically-driven motion increases the pressure of the lubricant at the nozzle and doses the amount of lubricant for injection by the length of the movement of the plunger member in the injection phase.

As compared to the above-mentioned WO2002/35068, not only better speed and volume control of lubricant ejection by the injector is achieved but also more flexibility with respect to adjustment of the injection into separate injector groups or even individually for each injector. Also, relatively to the above mentioned EP1426571A2, the timing and frequency precision is optimized.

Each of the injectors comprises an outlet-valve system at the nozzle configured for opening for flow of lubricant to the nozzle aperture during an injection phase upon pressure rise above a predetermined limit at the outlet-valve system and for closing the outlet-valve system after the injection phase. The outlet-valve system closes off for back-pressure from the cylinder and also prevents lubricant to enter the cylinder unless the outlet-valve is open. In addition, the outlet-valve system assists in a short closing time after injection, adding to precision in timing and volume of injected lubricant.

For example, the outlet-valve system comprises an outlet non-return valve. In the outlet non-return valve, the outlet-valve member, for example a ball, ellipsoid, plate, or cylinder, is pre-stressed against an outlet-valve seat by an outlet-valve spring. Upon provision of pressurised lubricant in a flow chamber upstream of the outlet-valve system, the pre-stressed force of the spring is counteracted by the lubricant pressure, and if the pressure is higher than the spring force, the outlet-valve member is displaced from its outlet-valve seat, and the outlet non-return valve opens for injection of lubricant through the nozzle aperture into the cylinder. For example, the outlet-valve spring acts on the valve member in a direction away from the nozzle aperture, although, an opposite movement is also possible.

Each injector comprises a lubricant inlet port for receiving lubricant from a lubricant feed conduit, typically, connected to a common lubricant supply system. For the described system, it suffices to provide a constant lubricant pressure at the lubricant inlet port of the injector.

In more detail, each injector comprises an electrically-driven pumping system which is electrically connected to the controller for receiving an electrical control-signal from the controller in order to activate the pumping system. When activated as a result of the receipt of the control signal in an injection phase, the pumping system causes electrically-driven motion of a reciprocal plunger member. During motion in the injection phase, the plunger member is acting on a predetermined lubricant volume inside the injector, which causes pressure rise in the lubricant in this predetermined lubricant volume, which in turn leads to pumping of this lubricant through the outlet-valve system and the nozzle aperture into the cylinder.

As the expelled volume is predetermined by the plunger movement, deviation from predetermined amounts would indicate a leak or a malfunctioning injector, for example due to clogging.

In some practical embodiments, the pumping system comprises an electrically-driven rigid push-member for pushing the reciprocal plunger member forwards towards the nozzle in an injection phase.

At the end of the injection phase, the plunger member is retracted, for example by a pre-stressed spring or actively by the electrical-driven pumping system, which causes closing of the outlet-valve system.

In practical embodiment, a reciprocal solenoid plunger is provided inside a solenoid coil and is driven by it upon electrical excitation of the solenoid. The solenoid plunger is connected to the plunger member such that the solenoid plunger and the plunger member are moving together. For example, the push member is provided in extension of the solenoid plunger.

Advantageously, an adjustment mechanism is provided in the injector for adjusting the length of motion of the plunger member. For example the adjustment mechanism acts on the plunger member. In the embodiment with the reciprocal solenoid plunger, an example of an adjustment mechanism is provided by a position-adjustable end stop for the solenoid plunger.

Optionally, the plunger member is spring-loaded in a direction away from the nozzle for causing retraction of the plunger member after the injection phase. Such mechanism is simple and easy to produce and implement at low cost, as compared to a retraction mechanism that has to be activated for retraction.

In some embodiments, the injector comprises a rigid lubricant conduit connecting the lubricant inlet port with the nozzle for flow of lubricant from the inlet port to the nozzle. The lubricant conduit comprises a front chamber at the nozzle and a rear chamber remote from the nozzle. The front chamber contains the predetermined lubricant volume for injection into the cylinder by the plunger member.

Advantageously, the injector is configured for connecting the front chamber with the rear chamber of the lubricant conduit between injection phases for providing flow-communication between the chambers. Between the injection phases, lubricant from the rear chamber flows to the front chamber and fills the front chamber with lubricant, ready to be pressurised and expelled for injection into the cylinder. In the injection phase, the front chamber is disconnected from the rear chamber with respect to lubricant flow, which is preventing back-flow of lubricant from the front chamber to the rear chamber when the lubricant is pressurized in the front chamber and expelled from the front chamber through the nozzle aperture by the forward movement of the plunger member.

For example, a valve mechanism is provided between the front chamber and the rear chamber to open for communication between the chambers in the injection phase and for and closing the valve mechanism and disconnecting the front chamber from the rear chamber after the injection phase.

In some concrete embodiments, the valve mechanism comprises a non-return valve between the front chamber and the rear chamber configured for closing by elevated lubricant pressure in the front chamber during forward motion of the plunger member. On the other hand, the non-return valve is opening during rearward motion of the plunger member by reduced lubricant pressure on the front chamber for fluid-flow connecting the front chamber with the rear chamber and suction of lubricant from the rear chamber to the front chamber during rearward motion of the plunger member.

In some alternative concrete embodiments, the valve mechanism comprises a bushing in which the plunger member is slidingly arranged. The plunger member comprises a flow passage configured for sliding in and out of the bushing by reciprocal movement of the plunger member in the bushing. The flow passage is configured for connecting the front chamber with the rear chamber when the flow passage is outside the bushing in order to allow for flow of lubricant through the flow passage from the rear chamber to the front chamber. The flow passage is further configured for disconnecting the front chamber from the rear chamber when the flow passage is moved into the bushing in order to prevent back-flow of lubricant from the front chamber to the rear chamber when lubricant is expelled at high pressure from the front chamber through the outlet-valve system and the nozzle aperture by the forward movement of the plunger member in an injection phase.

When the plunger member is driven forward towards the nozzle in the injection phase, the flow passage is driven towards the nozzle from a position outside the bushing into a position inside the bushing, and the flow passage is thereby closed, disconnecting flow-communication between the front chamber and the rear chamber. This is achieved by a tight fitting between the plunger member and the surrounding bushing. The forward motion of the plunger member causes pressure rise in the lubricant inside the front chamber until a pressure level is reached where the outlet valve system opens for ejection through the nozzle aperture and into the cylinder of the engine. Subsequently, the lubricant is pumped from the front chamber into the cylinder by the advancing plunger member.

At the end of the injection phase, the plunger member is retracted again, which reduces the pressure in the front chamber to a pressure where oil and potentially trace amounts of water in the lubricant evaporate. This state commonly called vacuum, although the volume is filled with evaporated liquid. When the plunger is retracted, the flow passage is opened again by being moved back out of the bushing, and lubricant can flow from the rear chamber through the flow passage into the front chamber, the flow being caused by the lower pressure in the front chamber relatively to the pressure in the rear chamber.

The plunger member is tightly abutting the bushing, typically cylindrical bushing, in order to prevent lubricant to creep through a space between the inner side of the bushing and the outer side of the plunger in the bushing.

For example, the flow passage is connecting an outer side of the plunger member with an internal channel in the plunger member, where the internal channel is in flow-communication with the front chamber.

As an alternative, the flow passage is not provided in the plunger member but in the bushing, and the plunger member closes and opens the flow passage during its reciprocal movement in the bushing. In a practical embodiment, the reciprocal plunger member tightly covers the flow passage during its forwards motion and moves away from the flow passage during the retraction, for example during the last part of the rearward motion.

In case that the outlet-valve system comprises a non-return valve in the nozzle, and the non-return valve comprises a valve member, for example ball, which is spring pressed against a valve seat, a high degree of robustness against failure has been observed. These systems are simple, and the risk for clogging is minimal. Also, the valve seats tend to be self-cleaning and subject to little uneven wear, especially for valve members being balls, why a high and long-term reliability is provided. Accordingly, the injector is simple and reliable, quick and precise, and easy to construct from standard components with low production costs.

The invention also has distinct advantages over systems in which a valve system for high-pressure feeding the injector is provided remote from the injector, for example as disclosed in the above-mentioned EP1767751. As the injector, as described above, compresses the lubricant inside the injector just upstream of the nozzle implies a short and rigid flow chamber for the compressed lubricant. Thereby, uncertainties and imprecisions of the injection amount and the timing are minimized in that minute compression and expansion of the oil in relatively long prior art conduits are avoided as well as expansion of the conduits themselves.

Also, the injection system is simple and individually controllable for the injectors, which implies a great degree of freedom for optimizing lubrication and minimizing lubricant consumption.

For example, the injectors comprise a nozzle with a nozzle aperture of between 0.1 and 1 mm, for example between 0.2 and 0.5mm, and are configured for ejecting a spray of atomized droplets, which is also called a mist of oil.

A spray of atomized droplets is important in SIP lubrication, where the sprays of lubricant are repeatedly injected by the injectors into the scavenging air inside the cylinder prior to the piston passing the injectors in its movement towards the TDC. In the scavenging air, the atomized droplets are diffused and distributed onto the cylinder wall, as they are transported in a direction towards the TDC due to a swirling motion of the scavenging air towards the TDC. The atomization of the spray is due to highly pressurized lubricant in the lubricant injector at the nozzle. The pressure is higher than 10 bars, typically between 25 bar and 100 bar for this high pressure injection. An example is an interval of between 30 and 80 bars, optionally between 35 and 60 bars. The injection time is short, typically in the order of 5-30 milliseconds (msec). However, the injection time can be adjusted to 1 msec or even less than 1 msec, for example down to 0.1 msec. Therefore imprecisions of only a few msec may alter the injection profile detrimentally, why high precision is required, as already mentioned above, for example a precision of 0.1 msec.

Also, the viscosity influences the atomization. Lubricants used in marine engines, typically, have a typical kinematic viscosity of about 220 cSt at 40°C and 20 cSt at 100°C, which translates into a dynamic viscosity of between 202 and 37 mPa·s. An example of a useful lubricant is the high performance, marine diesel engine cylinder oil ExxonMobil^{®} Mobilgard^{™} 560VS. Other lubricants useful for marine engines are other Mobilgard^{™} oils as well as Castrol^{®} Cyltech oils. Commonly used lubricants for marine engines have largely identical viscosity profiles in the range of 40-100°C and are all useful for atomization, for example when having a nozzle aperture diameter of 0.1-0.8 mm, and the lubricant has a pressure of 30-80 bars at the aperture and a temperature in the region of 30-100°C or 40-100°C. See also, the published article on this subject by Rathesan Ravendran, Peter Jensen, Jesper de Claville Christiansen, Benny Endelt, Erik Appel Jensen, (2017) "Rheological behaviour of lubrication oils used in two-stroke marine engines", Industrial Lubrication and Tribology, Vol. 69 Issue: 5, pp.750-753, https://doi.org/10.1108/ILT-03-2016-0075.

### SHORT DESCRIPTION OF THE DRAWINGS

The invention will be explained in more detail with reference to the drawing, where
- FIG. 1: is a sketch of part of a cylinder in an engine;
- FIG. 2: is a drawing of the injector;
- FIG. 3: illustrates an example of a nozzle;
- FIG. 4: illustrates an alternative example of a nozzle
- FIG. 5: shows a suction valve between rear and front chamber.

### DETAILED DESCRIPTION / PREFERRED EMBODIMENT

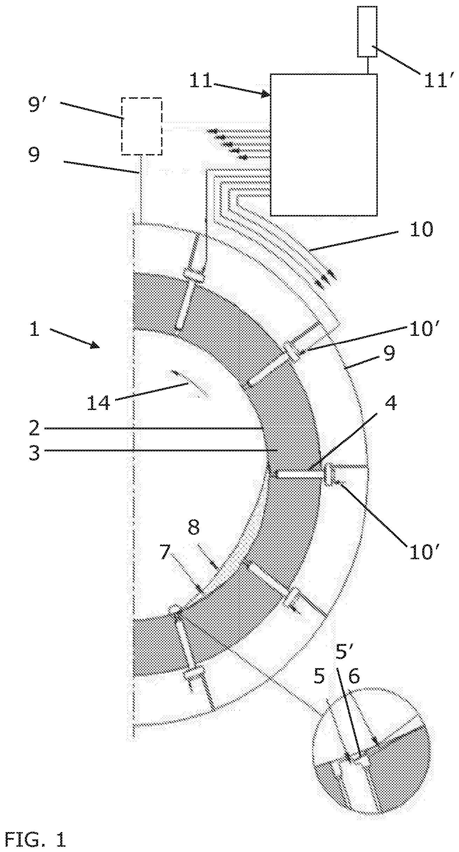

FIG. 1 illustrates one half of a cylinder 1 of a large slow-running two-stroke engine, for example marine diesel engine. The cylinder 1 comprises a cylinder liner 2 on the inner side of the cylinder wall 3. Inside the cylinder wall 3, there are provided a plurality of injectors 4 for injection of lubricant into the cylinder 1. As illustrated, the injectors 4 are distributed along a circle with the same angular distance between adjacent injectors 4, although this is not strictly necessary. Also, the arrangement along a circle is not necessary, seeing that an arrangement with axially shifted injectors is also possible, for example every second injector shifted towards the piston's top dead centre (TDC) relatively to a neighbouring injector.

Each of the injectors 4 has a nozzle 5 with a nozzle aperture 5' from which a fine atomized spray 8 with miniature droplets 7 is ejected under high pressure into the cylinder 1.

For example, the nozzle aperture 5' has a diameter of between 0.1 and 0.8 mm, such as between 0.2 and 0.5 mm, which at a pressure of 10-100 bars, for example 25 to 100 bars, optionally 30 to 80 bars or even 50 to 80 bars, atomizes the lubricant into a fine spray 8, which is in contrast to a compact jet of lubricant. The swirl 14 of the scavenging air in the cylinder 1 transports and presses the spray 8 against the cylinder liner 2 such that an even distribution of lubrication oil on the cylinder liner 2 is achieved. This lubrication system is known in the field as Swirl Injection Principle, SIP.

However, also other principles are envisaged in connection with the improved lubrication system, for example injectors that have jets directed towards the cylinder liner.

Optionally, the cylinder liner 2 is provided with free outs 6 for providing adequate space for the spray 8 or jet from the injector 4.

The injectors 4 receive lubrication oil through a lubricant feed conduit 9, typically through a common feed conduit 9, from a lubricant supply 9', for example oil circuit, of the engine. For example, the pressure in the lubricant feed conduit 9 is in the range of below 25, or below 10 bars, which is lower than a typical range of pressure of 25 to 100 bars, optionally 30 to 80 bars, for SIP valves. Use of the injectors as SIP injectors, is possible, however, due to the injectors 4 comprising an internal pressure increasing pumping system, as will become apparent in the following.

The injectors 4 are provided with electrical connectors 10' that are electrically communicating with a controller 11 through electrical cables 10. The controller 11 sends electrical control signals to the injectors 4 for controlling injection of lubricant by the injector 4 through the nozzle 5. As it is illustrated, one cable 10 is provided for each injector 4, which allows individual control of injection by the respective injector 4. However, it is also possible to provide one electrical cable 10 from the controller 11 to all injectors 4 such that all injectors 4 are injecting simultaneously upon receiving an electrical control signal through one single electrical cable 10. Alternatively, it is also possible to provide one electrical cable 10 from the controller 11 to a subgroup of injectors, for example a subgroup of 2, 3, 4, 5 or 6 injectors, such that a first subgroup is controlled by the controller through a first cable 10 and a second subgroup is controlled through a second cable 10. The number of cables and subgroups are selective dependent on preferred configurations.

The electrical control signals from the controller 11 to the injectors 4 are provided in precisely timed pulses, synchronised with the piston motion in the cylinder 1 of the engine.

For example, for the synchronisation, the controller system 11 comprises a computer 11' or is electronically connected a computer 11', by wires or wireless, where the computer 1" monitors parameters for the actual state and motion of the engine, for example speed, load, and position of the crankshaft, where the latter reveals the position of the pistons in the cylinders.

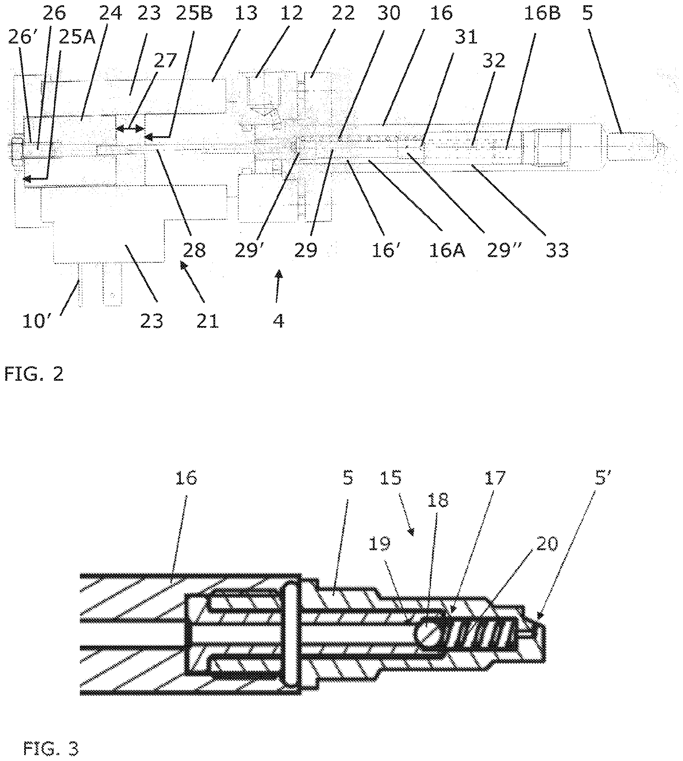

FIG. 2 illustrates cross sectional principle sketches of an injector 4. The injector 4 comprises a lubricant inlet port 12 for receiving lubricant from the lubricant feed conduit 9. The inlet port 12 is provided in an injector base 13. A flow chamber 16 is sealed against the injector base 13 and held tightly against the injector base 13 by a flange 22 that is fastened, typically bolted, to the injector base 13. The flow chamber 16 holds the nozzle 5 and flow-connects it to the inlet port 12 through a front chamber 16B and rear chamber 16A of a conduit 16' provided as a hollow inside the flow chamber 16 from the rear to the front of flow chamber 16.

The injector 4 also comprises a pumping system 21 for raising pressure of the lubricant inside the injector 4, for example to a pressure adequate for SIP injection, and pumping it through the nozzle 5. The pumping system comprises a solenoid coil 23 in which a solenoid plunger 24 is slidingly arranged. The solenoid plunger 24 is reciprocally movable over a distance 27 between a rearward end stop 25A and a forward end stop 25B, which are stationary parts of the injector base 13.

A push member 28, exemplified as a stem, is provided in extension of the solenoid plunger 24. The stem 28 pushes on the head 29' of a plunger member 29, which is spring-loaded against the stem 28 by a helical spring 30 inside the rear chamber 16A of the conduit 16' in flow chamber 16. The plunger member 29 is reciprocating together with the solenoid plunger 24 due to the spring load by spring 30. The plunger member 29 comprises a front part 29" that is provided with a flow-passage 31, flow-connecting the outer surface of the plunger member 29 with an internal channel 32 in the front part 29" of the plunger member 29. The internal channel 32 is communicating with the front chamber 16B of the conduit 26' in flow chamber 16 and with the nozzle 5. As a consequence, there is provided a lubricant flow path from the lubricant inlet port 12 into the rear chamber 16A, where the spring 30 is located, and further through the flow-passage 31 into the internal channel 32 and further to the front chamber 16B and into the nozzle 5. As long as the pressure in the front chamber 16B and in the nozzle 5 is not elevated above the pressure level of lubricant from the inlet port 12, no lubricant is expelled through the nozzle 5 due to an outlet valve system 15 in the nozzle 5, which regulates the injection pressure, for example the injection pressure necessary for proper SIP injection.

An example of an outlet valve system 15 is described with reference to in FIG. 3. The outlet-valve system 15 comprises a non-return outlet-valve 17. In the non-return outlet-valve 17, an outlet-valve member 18, exemplified as a ball, is pre-stressed against an outlet-valve seat 19 by an outlet-valve spring 20. Upon provision of pressurised lubricant at elevated level in the front chamber 16B, the pre-stressed forced of the outlet-valve spring 20 is counteracted by the lubricant pressure, and when the pressure gets higher than the spring force, the outlet-valve member 18 is displaced from its outlet-valve seat 19, and the non-return outlet-valve 17 opens for injection of lubricant through the nozzle aperture 5' into the cylinder 1.

As exemplified in FIG. 3, the outlet-valve spring 20 acts on the outlet-valve member 18 in a direction away from the nozzle aperture 5'. However, the configuration could be different with respect to the direction of the force of the outlet-valve spring 20 on the outlet-valve member 18 relatively to the nozzle aperture 5', as long as the outlet non-return valve 17 is closing for the supply of lubricant to the nozzle aperture 5' when in an idle state between injection phases. The closing of the non-return outlet-valve 17 in an idle state prevents unintended flow of lubricant from the flow chamber 16 through the nozzle aperture 5' into the cylinder 1 between injection phases.

Returning to FIG. 2, there is also illustrated a stationary bushing 33, formed as a cylinder, in which the front part 29" of the plunger member 29 is slidingly arranged. The bushing 33 fits tightly around the front part 29" of the plunger member 29, so that forward movement of the plunger member 29 towards the nozzle 5 closes the flow-passage 31 of the plunger member 29.

The elevated pressure that is necessary to open the outlet-valve system 15 in the nozzle 5 is provided by the plunger member 29 as follows. When the solenoid coil 23 received electrical current from the controller 11' through electrical connection 10' and is electrically activated, the solenoid plunger 24 is forced forward in a direction towards the nozzle 5. The push member 28, exemplified as stem 28, moves along with the solenoid plunger 24 and presses against the head 29' of the plunger member 29 and moves the plunger member 29 against the force of the spring 30. While the plunger member 29 moves forward, the flow-passage 31 of the front part 29" of the plunger member 29 is pushed into the bushing 33, which due to its tight fitting around the front part 29" of the plunger member 29 closes the flow passage 31, by which the front chamber 16B of the conduit 16' in the flow chamber 16 is decoupled from the rear chamber 16A of the conduit 16'.

Once, the front chamber 16B of the conduit 16' is decoupled, further forward movement of the plunger member 29 towards the nozzle 5 pressurizes the lubricant in the front chamber 16B of the conduit 16' and in the nozzle 5 to above the pressure level that is necessary to open the outlet valve system 15 in the nozzle 5. Accordingly, the forward movement of the plunger member 29 leads to lubricant ejection out through the nozzle aperture 5' and into the cylinder 1 of the engine.

When the solenoid plunger 24 hits the forward end stop 25B, the collective movement of solenoid plunger 24, the stem 28, and the plunger member 29 is stopped, the outlet valve system 15 in the nozzle 5 is closed again, and the injection phase stops. The spring 30 presses the plunger member 29 and the solenoid plunger 24 back to their start position. The return of the plunger member 29 creates a decreased pressure, also commonly called vacuum, in the front chamber 16B of the conduit 16', and as soon as the flow passage 31 is pulled sufficiently backwards to come free of the bushing 33, lubricant will flow from the rear chamber 16A through the flow passage 31 and refill the front chamber 16B. The lubricant in the rear chamber 16A is replenished from the lubricant fed conduit 9 through the lubricant inlet port 12 in the injector.

The location of the stem 28 relatively to the solenoid plunger 24 is depending on the adjustment of the screw 26. If the screw 26 is screwed longer into the internal thread 26' of the solenoid plunger 24, the stem 28 pushed the plunger member 29 over a longer distance towards the nozzle 5, and the volume of injection is larger. In reverse, if the screw 26 is screwed a distance out of the internal thread 26' of the plunger member 29, the distance by which the stem 28 pushes the plunger member 29 is less, and the expelled volume is reduced. The rearward motion of the plunger member 29 is always to the same position in order for the flow passage 31 to come free of the bushing 33, which is necessary to refill the from chamber 16B.

A number of advantages are achieved with a system as described. The flow passage 31 in combination with the tightly fitting bushing 33 is a simple valve system that is robust and unlikely to get clogged. A similar argument goes for the exemplified outlet-valve system 15 in the nozzle 5. Both systems are easy to manufacture at low cost from standard components. The solenoid coil-plunger combination 23, 24 for each injector (4) allows individual activation of injection. The adjustment of the length of the plunger-movement is simple when using the illustrated screw-system for the rearward end stop 26, which potentially is automated by a small actuator that turns the screw 26' of the rearward end stop 26.

A further advantage is that the pressurization of the lubricant to a high level, for example for SIP injection in the level of 25-100 bars is provided in a relatively small volume of the front chamber 16B inside the injector 4, yielding high precision with respect to volume and timing. This is in contrast to systems in which the high-pressurised lubricant is transported in long pipes, which introduces uncertainties with respect to injection volume and timing due to slight expansion of pipes and compression of the relatively large volumes of lubricant in the pipes.

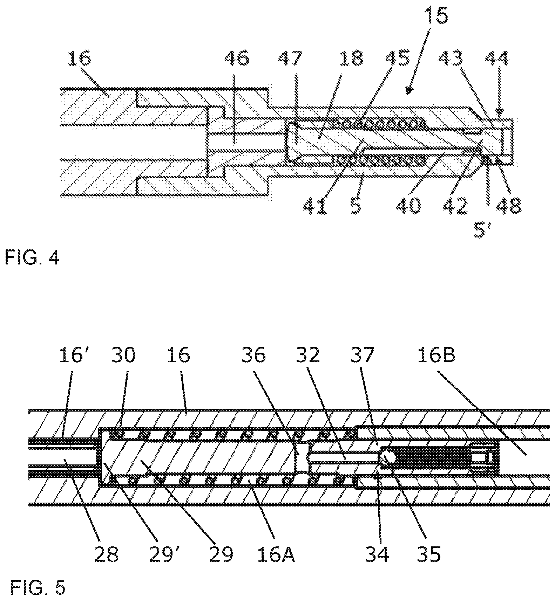

FIG. 4 illustrates a second, alternative embodiment of an outlet-valve system 15. The generalised principle of the outlet-valve system 15 is similar to the one disclosed in WO2014/048438. This reference also provides additional technical details as well as explanations to the functioning of the injector presented here, which are not repeated here, for convenience. A nozzle aperture 5' is provided in the nozzle 5 tip for ejection of lubrication oil. Inside a cavity 40 of the nozzle 5, an outlet-valve member 18 is provided, the outlet-valve member 18 comprising a stem 41 and a cylindrical sealing head 42 which is arranged slidingly in a cylindrical cavity part 43 at the nozzle tip 44. The position of the valve member 18 is pre-stressed backwards away from the nozzle tip 44 by a spring 45 and is offset forwards by oil pressure acting through a channel 46 upon the back part 47 of the stem 41, the oil pressure acting against the spring force. The nozzle aperture 5' is sealingly covered by the sealing head 42 which abuts the cylindrical cavity part 43 at the nozzle tip 44, unless the valve member 18 is pushed forward such that the sealing head 43 slides pass and away from the nozzle aperture 5' to allow lubricant oil to flow from the inner cavity 46 through the nozzle aperture 5' for ejection.

FIG. 5 illustrates a suction valve 34 as an alternative to the plunger member's flow-passage 31 that closes off internal channel 32 of the plunger member 29 when it slides inside the bushing 33, as illustrated in FIG. 1. The suction valve 34 in FIG. 5 comprises a ball member 35 which is pressed against the ball valve seat 37 during forward motion of the plunger member 29 and thereby closes for passage of lubricant from the front chamber 16B to the rear chamber 16A. Optionally but not necessarily, the ball 35 is pre-stressed by a spring (not shown) against a seat 37 in the front chamber 16B. During retraction of the plunger member 29, the suction force created on the front chamber 16B by the retraction will displace the ball 35 from the seat 37 and open flow from the rear chamber 16A to the front chamber 16B through the transverse passage 36 and the internal channel 32 of the plunger member 29.

### Reference numbers

1 cylinder
2 cylinder liner
3 cylinder wall
4 oil injector
5 nozzle
5' nozzle aperture
6 free cut in liner
7 atomised spray from a single injector 4
8 swirling spray
9 lubricant feed conduit
9' lubricant supply
10 electrical signal cable
10' electrical connection between electrical signal cable 10 and solenoid coil 23 in injector 4
11 controller
11' computer
12 lubricant inlet port of injector 4
13 injector base
14 swirl in cylinder
15 outlet-valve system of injector 4
16 flow chamber connecting lubricant inlet port 12 with outlet-valve system 15
16' conduit of flow chamber 16
16A rear chamber of conduit 16' of flow chamber 16
16B front chamber of conduit 16' of flow chamber 16
17 non-return outlet-valve, ex. outlet ball valve
18 outlet-valve member, ex. ball
19 outlet-valve seat
20 outlet-valve spring
21 pumping system
22 flange for holding flow chamber 16 against injector base
23 solenoid coil
24 solenoid plunger in coil 23
25 forward end stop for solenoid plunger 24
26 adjustable rearward end stop for solenoid plunger 24
26' adjustment screw of adjustable rearward end stop 26
27 length of movement of solenoid plunger 24
28 push member in the form of a stem in extension of solenoid plunger 24
29 plunger member
29' head of plunger member 29
29" front part of plunger member 29
30 spring
31 flow-passage in front part 29" of plunger member 29
32 internal channel of plunger member 29
33 bushing in which plunger member 29 slides and which closes flow opening 31
34 suction valve in plunger member 29 between rear and front chambers 16A, 16B
35 ball member pre-stressed against valve seat 37 in suction valve 34
36 transverse passage in plunger member 29
37 valve seat for ball member
40 cavity
41 stem
42 cylindrical sealing head
43 cylindrical cavity part
44 nozzle tip
45 spring
46 channel
47 back part 47 of the stem 41

## Claims

1. A large slow-running two-stroke engine comprising a cylinder (1) with a reciprocal piston inside and with a plurality of injectors (4) distributed along a perimeter of the cylinder (1) for injection of lubricant into the cylinder (1) at various positions on the perimeter; the engine further comprising a controller (11) for controlling the amount and timing of the lubricant injection by at least one of the injectors (4);
wherein each injector (4) comprises
- a housing, the housing comprising a base (13), the base (13) comprising a lubricant inlet port (12) for receiving lubricant from a lubricant feed conduit (9);
- a nozzle (5) with a nozzle aperture (5') extending into the cylinder (1) for injecting lubricant from the inlet port (12) into a cylinder (1);
- an outlet-valve system (15) for opening and closing for flow of lubricant to the nozzle aperture (5') during an injection cycle; the outlet-valve system (15) being configured for opening for flow of lubricant to the nozzle aperture (5') during an injection phase upon pressure rise above a predetermined limit at the outlet-valve system (15) and for closing the outlet-valve system (15) after the injection phase;
- a pumping system for moving a reciprocal plunger member (29) in an injection phase, the plunger member (29) being configured for acting on a predetermined lubricant volume inside the injector (4) by the movement during the injection phase for causing pressure rise in the lubricant of the predetermined lubricant volume and for pumping this lubricant through the outlet-valve system (15) and the nozzle aperture (5') into the cylinder (1);
wherein the pumping system inside the injector is an electrically-driven pumping system (21) which is electrically connected to the controller (11) for receiving an electrical control-signal and wherein the pumping system is configured as a result of the control signal causing electrically-driven motion of the plunger member (29) in an injection phase;
wherein the housing comprises a flow chamber (16) that rigidly connects the base (13) with the nozzle (5), the flow chamber (16) being hollow for lubricant flow inside the flow chamber (16) from the base (13) to the nozzle (5), the flow chamber (16) extending through the cylinder wall (3) of the engine for holding the nozzle (5) rigidly inside the cylinder (1) by the flow chamber (16);
**characterized in that**
the injector comprises only one nozzle (5), which is located inside the cylinder wall (3);
- each injector is only connected to a single lubricant feed conduit, and electrically connected to the controller,
- the outlet valve system (15) comprises a non-return valve in the nozzle (5); and
- the plunger member (29) is provided in the flow chamber (16), where the motion of the plunger member in the flow chamber increases the injection pressure of the lubricant, and where
- the movement of the plunger member (29) inside the injector is controlled by the electrically-driven pumping system (21), which receives an electrical control-signal such that the control signal causes electrically-driven motion of the plunger member (29) inside the flow chamber (16)
- where said flow chamber (16) extends through the cylinder wall, and when the injector is mounted in a cylinder wall of a large slow-running two-stroke engine the nozzle is held rigidly by the flow chamber arranged in the cylinder wall.

2. An engine according to claim 1, wherein the electrically-driven pumping system (21) comprises a solenoid coil (23) and a reciprocal solenoid plunger (24) for being driven by the solenoid coil (23) upon electrical excitation of the solenoid coil (23); wherein the solenoid plunger is connected to the plunger member (29) for driving the solenoid plunger (24) and the plunger member (29) together.

3. An engine according to claim 1 or 2, wherein the injector (4) comprises a lubricant conduit (16') connecting the lubricant inlet port (12) with the nozzle (5) for flow of lubricant from the inlet port (12) to the nozzle (5); wherein the lubricant conduit (16') comprises a front chamber (16B) near the nozzle (5) and a rear chamber (16A) remote from the nozzle (5), the front chamber (16B) containing the predetermined lubricant volume; wherein the injector (4) is configured for connecting the front chamber (16B) with the rear chamber (16A) between injection phases for flow of lubricant from the rear chamber (16A) to the front chamber (16B) and configured for disconnecting the front chamber (16B) from the rear chamber (16A) in the injection phase for preventing back-flow of lubricant from the front chamber (16B) when lubricant is pressurised in the front chamber (16B) and expelled from the front chamber (16B) through the nozzle aperture (5') by the forward movement of the plunger member (29).

4. An engine according to claim 3, wherein the injector (4), for disconnecting the front chamber (16B) from the rear chamber (16A) in the injection phase, comprises a non-return valve (34) between the front chamber (16B) and the rear chamber (16A), wherein the non-return valve (34) is configured for closing the non-return valve (34) by elevated lubricant pressure in the front chamber (16B) during forward motion of the plunger member (29) and for opening the valve during rearward motion of the plunger member (29) by reduced lubricant pressure on the front chamber (16B) and thereby fluid-flow connecting the front chamber (16B) with the rear chamber (16A) for suction of lubricant from the rear chamber (16A) to the front chamber during rearward motion of the plunger member (29).

5. An engine according to claim 3, wherein the injector (4), for disconnecting the front chamber (16B) from the rear chamber (16A) in the injection phase, comprises a bushing (33) in which the plunger member (29) is slidingly arranged; wherein the plunger member (29) comprises a flow aperture (31) configured for reciprocal sliding in and out of the bushing (33) and thereby being alternatingly closed and opened, or wherein the bushing comprises a flow aperture (31) configured for being alternatingly closed and opened by the reciprocal movement of the plunger member (29) in the bushing (33); wherein the flow aperture (31) is configured for connecting the front chamber (16B) with the rear chamber (16A) when opened for flow of lubricant through the flow aperture (31) from the rear chamber (16A) to the front chamber (16B) and configured for disconnecting the front chamber (16B) from the rear chamber (16A) when closed for preventing back-flow of lubricant from the front chamber (16B) when lubricant is expelled from the front chamber (16B) through the nozzle aperture (5') by the forward movement of the plunger member (29) in the injection phase.

6. A method for lubricating a large slow-running two-stroke engine comprising a cylinder (1) with a reciprocal piston inside and with a plurality of injectors (4) distributed along a perimeter of the cylinder (1) for injection of lubricant into the cylinder (1) at various positions on the perimeter; the engine further comprising a controller (11) controlling the amount and timing of the lubricant injection by at least one of the injectors;
wherein each injector (4) comprises
- a housing, the housing comprising a base (13), the base (13) comprising a lubricant inlet port (12) for receiving lubricant from a lubricant feed conduit (9);
- a nozzle (5) with a nozzle aperture (5') extending into the cylinder (1) for injecting lubricant from the inlet port (12) into a cylinder (1);
- an outlet-valve system (15) for opening and closing for flow of lubricant to the nozzle aperture (5') during an injection cycle; the outlet-valve system (15) being configured for opening for flow of lubricant to the nozzle aperture (5') during an injection phase upon pressure rise above a predetermined limit at the outlet-valve system (15) and for closing the outlet-valve system (15) after the injection phase;
- a pumping system for moving a reciprocal plunger member (29) in an injection phase, the plunger member (29) being configured for acting on a predetermined lubricant volume inside the injector (4) by the movement during the injection phase for causing pressure rise in the lubricant of the predetermined lubricant volume and for pumping this lubricant through the outlet-valve system (15) and the nozzle aperture (5') into the cylinder (1);
wherein the pumping system inside the injector is an electrically-driven pumping system (21) which is electrically connected to the controller (11) for receiving an electrical control-signal and wherein the pumping system is configured as a result of the control signal causing electrically-driven motion of the plunger member (29) in an injection phase;
the method comprising the pumping system (21) receiving an electrical control signal from the controller (11) and as a consequence thereof starting an injection phase by moving the reciprocal plunger member (29) and causing pressure rise in a predetermined lubricant volume inside the injector (4) and by the pressure rise pumping this predetermined lubricant volume through the outlet-valve system (15) and the nozzle aperture (5') into the cylinder (1); at the end of the injection phase, retracting the plunger member (29) and causing closing of the outlet-valve system (15);wherein the housing comprises a flow chamber (16) that rigidly connects the base (13) with the nozzle (5), the flow chamber (16) being hollow for lubricant flow inside the flow chamber (16) from the base (13) to the nozzle (5), the flow chamber (16) extending through the cylinder wall (3) of the engine for holding the nozzle (5) rigidly inside the cylinder (1) by the flow chamber (16);
**characterized in that**
- the injector comprises only one nozzle (5), which is located inside the cylinder wall (3);
- the outlet valve system (15) comprises a non-return valve in the nozzle (5); and
- the plunger member (29) is provided in the flow chamber (16)
- the movement of the plunger member (29) inside the injector is controlled by the electrically-driven pumping system (21), which receives an electrical control-signal such that the control signal causes electrically-driven motion of the plunger member (29) inside the flow chamber (16)
- where said flow chamber (16) extends through the cylinder wall, and when the injector in use is mounted in a cylinder wall of a large slow-running two-stroke engine the nozzle is held rigidly by the flow chamber arranged in the cylinder wall.

7. A method according to claim 6, wherein the electrically-driven pumping system (21) comprises a solenoid coil (23) and a reciprocal solenoid plunger (24) for being driven by the solenoid coil (23) upon electrical excitation of the solenoid coil (23); wherein the solenoid plunger (24) is connected to the plunger member (29) for driving the solenoid plunger (24) and the plunger member (29) together; wherein the method comprises moving the plunger member (29) by the solenoid plunger (24) in the injection phase.

8. A method according to claim 6 or 7, wherein the injector (4) comprises a lubricant conduit (16') connecting the lubricant inlet port (12) with the nozzle (5) for flow of lubricant from the inlet port (12) to the nozzle (5); wherein the lubricant conduit (16') comprises a front chamber (16B) near the nozzle (5) and a rear chamber (16A) remote from the nozzle (5), the front chamber (16B) containing the predetermined lubricant volume; wherein the method comprises connecting the front chamber (16B) with the rear chamber (16A) between injection phases and causing flow of lubricant from the rear chamber (16A) to the front chamber (16B) for filling the front chamber (16B) and disconnecting the front chamber (16B) from the rear chamber (16A) in the injection phase for preventing back-flow of lubricant from the front chamber (16B) when lubricant is pressurised in the front chamber (16B) and expelled from the front chamber (16B) through the nozzle aperture (5') by the forward movement of the plunger member (29).

9. A method according to claim 8, wherein the injector (4), for disconnecting the front chamber (16B) from the rear chamber (16A) in the injection phase, comprises a non-return valve (34) between the front chamber (16B) and the rear chamber (16A), wherein the method comprises closing the non-return valve (34) by elevated lubricant pressure on the front chamber (16B) during forward motion of the plunger member (29) and opening the valve during rearward motion of the plunger member (29) by reduced lubricant pressure on the front chamber (16B) and thereby fluid-flow connecting the front chamber (16B) with the rear chamber (16A) for suction of lubricant from the rear chamber (16A) to the front chamber during rearward motion of the plunger member (29).

10. A method according to claim 8, wherein the injector (4) comprises a bushing (33) in which the plunger member (29) is slidingly arranged; wherein the plunger member (29) comprises a flow aperture (31) configured for reciprocal sliding in and out of the bushing (33) and thereby being alternatingly closed and opened, or wherein the bushing comprises a flow aperture (31) configured for being alternatingly closed and opened by the reciprocal movement of the plunger member (29) in the bushing (33); wherein the flow aperture (31) is configured for connecting the front chamber (16B) with the rear chamber (16A) when opened for flow of lubricant through the flow aperture (31) from the rear chamber (16A) to the front chamber (16B) and configured for disconnecting the front chamber (16B) from the rear chamber (16A) when closed for preventing back-flow of lubricant from the front chamber (16B) when lubricant is expelled from the front chamber (16B) through the nozzle aperture (5') by the forward movement of the plunger member (29) in the injection phase;
wherein the method comprises, in the injection phase, driving the plunger member (29) forward towards the nozzle inside the bushing (33) and closing the flow passage for disconnecting flow-communication between the front chamber (16B) and the rear chamber (16A); at the end of the injection phase, causing a pressure in the front chamber (16B) that is lower than in the rear chamber by retracting the plunger member (29) and then opening the flow passage (31) during the retraction and causing flow of lubricant from the rear chamber (16A) through the flow passage (31) into the front chamber (16B) due to the pressure difference.

11. An injector for an engine according to anyone of the claims 1-5 or for a method according to anyone of the claims claim 6-10, wherein the injector (4) comprises
- a housing, the housing comprising a base (13), the base (13) comprising a lubricant inlet port (12) for receiving lubricant from a lubricant feed conduit (9);
- a nozzle (5) with a nozzle aperture (5') for injecting lubricant from the inlet port (12) into a cylinder (1) of an engine;
- an outlet-valve system (15) for opening and closing for flow of lubricant to the nozzle aperture (5') during an injection cycle; the outlet-valve system (15) being configured for opening for flow of lubricant to the nozzle aperture (5') during an injection phase upon pressure rise above a predetermined limit at the outlet-valve system (15) and for closing the outlet-valve system (15) after the injection phase;
- a pumping system for moving a reciprocal plunger member (29) in an injection phase, the plunger member (29) being configured for acting on a predetermined lubricant volume inside the injector (4) by the movement during the injection phase for causing pressure rise in the lubricant of the predetermined lubricant volume and for pumping this lubricant through the outlet-valve system (15) and the nozzle aperture (5') into the cylinder (1);
wherein the pumping system inside the injector is an electrically-driven pumping system (21) which is electrically connected to the controller (11) for receiving an electrical control-signal and wherein the pumping system is configured as a result of the control signal causing electrically-driven motion of the plunger member (29) in an injection phase;wherein the housing comprises a flow chamber (16) that rigidly connects the base (13) with the nozzle (5), the flow chamber (16) being hollow for lubricant flow inside the flow chamber (16) from the base (13) to the nozzle (5), the flow chamber (16) extending through the cylinder wall (3) of the engine for holding the nozzle (5) rigidly inside the cylinder (1) by the flow chamber (16);
**characterized in that**
- the injector comprises only one nozzle (5) configured for being located inside the cylinder wall (3) when the flow chamber (16) extends through the cylinder wall (3);
- the outlet valve system (15) comprises a non-return valve in the nozzle (5); and
- the plunger member (29) is provided in the flow chamber (16)
- the movement of the plunger member (29) inside the injector is controlled by the electrically-driven pumping system (21), which receives an electrical control-signal such that the control signal causes electrically-driven motion of the plunger member (29) inside the flow chamber (16)
- where said flow chamber (16) extends through the cylinder wall, and when the injector in use is mounted in a cylinder wall of a large slow-running two-stroke engine the nozzle is held rigidly by the flow chamber arranged in the cylinder wall.

12. An injector according to claim 11, wherein the electrically-driven pumping system (21) comprises a solenoid coil (23) and a reciprocal solenoid plunger (24) for being driven by the solenoid coil (23) the upon electrical excitation of the solenoid coil (23); wherein the solenoid plunger is connected to the plunger member (29) for driving the solenoid plunger (24) and the plunger member (29) together.

13. An injector according to claim 11 or 12, comprising an adjustment mechanism (26') for adjusting the length of motion of the plunger member (29).

14. An injector according to anyone of the claims 11-13, wherein the injector (4) comprises a lubricant conduit (16') connecting the lubricant inlet port (12) with the nozzle (5) for flow of lubricant from the inlet port (12) to the nozzle (5); wherein the lubricant conduit (16') comprises a front chamber (16B) near the nozzle (5) and a rear chamber (16A) remote from the nozzle (5), the front chamber (16B) containing the predetermined lubricant volume; wherein the injector (4) is configured for connecting the front chamber (16B) with the rear chamber (16A) between injection phases for flow of lubricant from the rear chamber (16A) to the front chamber (16B) and configured for disconnecting the front chamber (16B) from the rear chamber (16A) in the injection phase for preventing back-flow of lubricant from the front chamber (16B) when lubricant is pressurised in the front chamber (16B) and expelled from the front chamber (16B) through the nozzle aperture (5') by the forward movement of the plunger member (29).

15. An injector according to claim 14, wherein the injector (4), for disconnecting the front chamber (16B) from the rear chamber (16A) in the injection phase, comprises a non-return valve (34) between the front chamber (16B) and the rear chamber (16A), wherein the non-return valve (34) is configured for closing the non-return valve (34) by elevated lubricant pressure on the front chamber (16B) during forward motion of the plunger member (29) and for opening the valve during rearward motion of the plunger member (29) by reduced lubricant pressure on the front chamber (16B) and thereby fluid-flow connecting the front chamber (16B) with the rear chamber (16A) for suction of lubricant from the rear chamber (16A) to the front chamber during rearward motion of the plunger member (29).

## Patentansprüche

1. Großer, langsam laufender Zweitaktmotor, umfassend einen Zylinder (1) mit einem hin- und hergehenden Kolben im Inneren und mit einer Vielzahl von Einspritzdüsen (4), die entlang eines Umfangs des Zylinders (1) zur Einspritzung von Schmiermittel in den Zylinder (1) an verschiedenen Positionen des Umfangs verteilt ist; wobei der Motor ferner eine Steuereinrichtung (11) zum Steuern von Menge und Zeitpunkt der Schmiermitteleinspritzung durch mindestens eine der Einspritzdüsen (4) umfasst;
wobei jede Einspritzdüse (4) umfasst
- ein Gehäuse, wobei das Gehäuse eine Basis (13) umfasst, wobei die Basis (13) eine Schmiermitteleinlassöffnung (12) zum Aufnehmen von Schmiermittel von einer Schmiermittelzufuhrleitung (9) umfasst;
- eine Düse (5) mit einer sich in den Zylinder (1) erstreckenden Düsenöffnung (5') zum Einspritzen von Schmiermittel von der Einlassöffnung (12) in einen Zylinder (1);
- ein Auslassventilsystem (15) zum Öffnen und Schließen für den Schmiermittelfluss zur Düsenöffnung (5') während eines Einspritzzyklus; wobei das Auslassventilsystem (15) zum Öffnen für einen Schmiermittelfluss zur Düsenöffnung (5') während einer Einspritzphase bei einem Druckanstieg über eine vorgegebene Grenze an dem Auslassventilsystem (15) und zum Schließen des Auslassventilsystems (15) nach der Einspritzphase konfiguriert ist;
- ein Pumpsystem zum Bewegen eines hin- und hergehenden Kolbenelements (29) in einer Einspritzphase, wobei das Kolbenelement (29) zum Einwirken auf ein vorgegebenes Schmiermittelvolumen innerhalb der Einspritzdüse (4) durch die Bewegung während der Einspritzphase, um einen Druckanstieg in dem Schmiermittel des vorgegebenen Schmiermittelvolumens zu bewirken, und zum Pumpen dieses Schmiermittels durch das Auslassventilsystem (15) und die Düsenöffnung (5') in den Zylinder (1) konfiguriert ist;
wobei das Pumpsystem im Inneren der Einspritzdüse ein elektrisch angetriebenes Pumpsystem (21) ist, das elektrisch mit der Steuereinrichtung (11) verbunden ist, um ein elektrisches Steuersignal zu empfangen, und wobei das Pumpsystem dazu konfiguriert ist, als Ergebnis des Steuersignals eine elektrisch angetriebene Bewegung des Kolbenelements (29) in einer Einspritzphase zu bewirken;
wobei das Gehäuse eine Durchflusskammer (16) umfasst, die die Basis (13) starr mit der Düse (5) verbindet, wobei die Durchflusskammer (16) hohl ist, damit Schmiermittel im Inneren der Durchflusskammer (16) von der Basis (13) zu der Düse (5) fließt, wobei sich die Durchflusskammer (16) durch die Zylinderwand (3) des Motors erstreckt, um die Düse (5) mittels der Durchflusskammer (16) starr im Inneren des Zylinders (1) zu halten;
**dadurch gekennzeichnet, dass**
die Einspritzdüse nur eine Düse (5) umfasst, die innerhalb der Zylinderwand (3) angeordnet ist;
- jede Einspritzdüse nur mit einer einzigen Schmiermittelzufuhrleitung verbunden ist und elektrisch mit der Steuereinrichtung verbunden ist,
- das Auslassventilsystem (15) ein Rückschlagventil in der Düse (5) umfasst; und
- das Kolbenelement (29) in der Durchflusskammer (16) bereitgestellt ist, wobei die Bewegung des Kolbenelements in der Durchflusskammer den Einspritzdruck des Schmiermittels erhöht, und wobei
- die Bewegung des Kolbenelements (29) innerhalb der Einspritzdüse durch das elektrisch angetriebene Pumpsystem (21) gesteuert wird, das ein elektrisches Steuersignal empfängt, derart, dass das Steuersignal eine elektrisch angetriebene Bewegung des Kolbenelements (29) in der Durchflusskammer (16) bewirkt
- wobei sich die Durchflusskammer (16) durch die Zylinderwand erstreckt, und wenn die Einspritzdüse in einer Zylinderwand eines großen, langsam laufenden Zweitaktmotors montiert ist, die Düse mittels der in der Zylinderwand angeordneten Durchflusskammer starr gehalten wird.

2. Motor nach Anspruch 1, wobei das elektrisch angetriebene Pumpsystem (21) eine Solenoidspule (23) und einen hin- und hergehenden Solenoidkolben (24) zum Antrieb durch die Solenoidspule (23) bei elektrischer Erregung der Solenoidspule (23) umfasst; wobei der Solenoidkolben mit dem Kolbenelement (29) verbunden ist, um den Solenoidkolben (24) und das Kolbenelement (29) zusammen anzutreiben.

3. Motor nach Anspruch 1 oder 2, wobei die Einspritzdüse (4) eine Schmiermittelleitung (16') umfasst, die die Schmiermitteleinlassöffnung (12) mit der Düse (5) zum Strömen von Schmiermittel von der Einlassöffnung (12) zu der Düse (5) verbindet; wobei die Schmiermittelleitung (16') eine vordere Kammer (16B) nahe der Düse (5) und eine hintere Kammer (16A) entfernt von der Düse (5) umfasst, wobei die vordere Kammer (16B) das vorgegebene Schmiermittelvolumen enthält; wobei die Einspritzdüse (4) dazu konfiguriert ist, die vordere Kammer (16B) zwischen Einspritzphasen für einen Schmiermittelfluss von der hinteren Kammer (16A) zur vorderen Kammer (16B) mit der hinteren Kammer (16A) zu verbinden, und dazu konfiguriert ist, die vordere Kammer (16B) in der Einspritzphase von der hinteren Kammer (16A) zu trennen, um einen Rückfluss von Schmiermittel aus der vorderen Kammer (16B) zu verhindern, wenn Schmiermittel in der vorderen Kammer (16B) aufgrund der Vorwärtsbewegung des Kolbenelements (29) unter Druck gesetzt und durch die Düsenöffnung (5') aus der vorderen Kammer (16B) ausgestoßen wird.

4. Motor nach Anspruch 3, wobei die Einspritzdüse (4) zum Trennen der vorderen Kammer (16B) von der hinteren Kammer (16A) in der Einspritzphase ein Rückschlagventil (34) zwischen der vorderen Kammer (16B) und der hinteren Kammer (16A) umfasst, wobei das Rückschlagventil (34) dazu konfiguriert ist, das Rückschlagventil (34) durch erhöhten Schmiermitteldruck in der vorderen Kammer (16B) während der Vorwärtsbewegung des Kolbenelements (29) zu schließen und das Ventil während der Rückwärtsbewegung des Kolbenelements (29) durch verringerten Schmiermitteldruck auf die vordere Kammer (16B) zu öffnen und dadurch die vordere Kammer (16B) für Fluidfluss mit der hinteren Kammer (16A) zu verbinden, um während der Rückwärtsbewegung des Kolbenelements (29) Schmiermittel aus der hinteren Kammer (16A) zu der vorderen Kammer zu saugen.

5. Motor nach Anspruch 3, wobei die Einspritzdüse (4) zum Trennen der vorderen Kammer (16B) von der hinteren Kammer (16A) in der Einspritzphase eine Buchse (33) umfasst, in der das Kolbenelement (29) verschiebbar angeordnet ist; wobei das Kolbenelement (29) eine Durchflussöffnung (31) umfasst, die zum hin- und hergehenden Gleiten in die Buchse (33) und aus dieser heraus konfiguriert ist und dadurch abwechselnd geschlossen und geöffnet wird, oder wobei die Buchse eine Durchflussöffnung (31) umfasst, die dazu konfiguriert ist, durch die Hin- und Herbewegung des Kolbenelements (29) in der Buchse (33) abwechselnd geschlossen und geöffnet zu werden; wobei die Durchflussöffnung (31) dazu konfiguriert ist, die vordere Kammer (16B) mit der hinteren Kammer (16A) zu verbinden, wenn sie für einen Schmiermittelfluss durch die Durchflussöffnung (31) von der hinteren Kammer (16A) zu der vorderen Kammer (16B) geöffnet ist, und dazu konfiguriert ist, die vordere Kammer (16B) von der hinteren Kammer (16A) zu trennen, wenn sie geschlossen ist, um einen Rückfluss von Schmiermittel aus der vorderen Kammer (16B) zu verhindern, wenn in der Einspritzphase Schmiermittel durch die Vorwärtsbewegung des Kolbenelements (29) durch die Düsenöffnung (5') aus der vorderen Kammer (16B) ausgestoßen wird.

6. Verfahren zum Schmieren eines großen, langsam laufenden Zweitaktmotors, der einen Zylinder (1) mit einem hin- und hergehenden Kolben im Inneren und mit einer Vielzahl von Einspritzdüsen (4) umfasst, die entlang eines Umfangs des Zylinders (1) zur Einspritzung von Schmiermittel in den Zylinder (1) an verschiedenen Positionen des Umfangs verteilt ist; wobei der Motor ferner eine Steuereinrichtung (11) umfasst, die die Menge und den Zeitpunkt der Schmiermitteleinspritzung durch mindestens eine der Einspritzdüsen steuert;
wobei jede Einspritzdüse (4) umfasst
- ein Gehäuse, wobei das Gehäuse eine Basis (13) umfasst, wobei die Basis (13) eine Schmiermitteleinlassöffnung (12) zum Aufnehmen von Schmiermittel von einer Schmiermittelzufuhrleitung (9) umfasst;
- eine Düse (5) mit einer sich in den Zylinder (1) erstreckenden Düsenöffnung (5') zum Einspritzen von Schmiermittel von der Einlassöffnung (12) in einen Zylinder (1);
- ein Auslassventilsystem (15) zum Öffnen und Schließen für den Schmiermittelfluss zur Düsenöffnung (5') während eines Einspritzzyklus; wobei das Auslassventilsystem (15) zum Öffnen für einen Schmiermittelfluss zur Düsenöffnung (5') während einer Einspritzphase bei einem Druckanstieg über eine vorgegebene Grenze an dem Auslassventilsystem (15) und zum Schließen des Auslassventilsystems (15) nach der Einspritzphase konfiguriert ist;
- ein Pumpsystem zum Bewegen eines hin- und hergehenden Kolbenelements (29) in einer Einspritzphase, wobei das Kolbenelement (29) zum Einwirken auf ein vorgegebenes Schmiermittelvolumen innerhalb der Einspritzdüse (4) durch die Bewegung während der Einspritzphase, um einen Druckanstieg in dem Schmiermittel des vorgegebenen Schmiermittelvolumens zu bewirken, und zum Pumpen dieses Schmiermittels durch das Auslassventilsystem (15) und die Düsenöffnung (5') in den Zylinder (1) konfiguriert ist;
wobei das Pumpsystem im Inneren der Einspritzdüse ein elektrisch angetriebenes Pumpsystem (21) ist, das elektrisch mit der Steuereinrichtung (11) verbunden ist, um ein elektrisches Steuersignal zu empfangen, und wobei das Pumpsystem dazu konfiguriert ist, als Ergebnis des Steuersignals eine elektrisch angetriebene Bewegung des Kolbenelements (29) in einer Einspritzphase zu bewirken;
wobei das Verfahren umfasst, dass das Pumpsystem (21) ein elektrisches Steuersignal von der Steuereinrichtung (11) empfängt und als Folge davon eine Einspritzphase durch Bewegen des hin- und hergehenden Kolbenelements (29) startet und einen Druckanstieg in einem vorgegebenen Schmiermittelvolumen im Inneren der Einspritzdüse (4) bewirkt und durch den Druckanstieg dieses vorgegebene Schmiermittelvolumen durch das Auslassventilsystem (15) und die Düsenöffnung (5') in den Zylinder (1) pumpt; am Ende der Einspritzphase das Kolbenelement (29) zurückzieht und das Schließen des Auslassventilsystems (15) bewirkt; wobei das Gehäuse eine Durchflusskammer (16) umfasst, die die Basis (13) starr mit der Düse (5) verbindet, wobei die Durchflusskammer (16) hohl ist, damit Schmiermittel im Inneren der Durchflusskammer (16) von der Basis (13) zu der Düse (5) fließt, wobei sich die Durchflusskammer (16) durch die Zylinderwand (3) des Motors erstreckt, um die Düse (5) mittels der Durchflusskammer (16) starr innerhalb des Zylinders (1) zu halten;
**dadurch gekennzeichnet, dass**
- die Einspritzdüse nur eine Düse (5) umfasst, die innerhalb der Zylinderwand (3) angeordnet ist;
- das Auslassventilsystem (15) ein Rückschlagventil in der Düse (5) umfasst; und
- das Kolbenelement (29) in der Durchflusskammer (16) bereitgestellt ist
- die Bewegung des Kolbenelements (29) innerhalb der Einspritzdüse durch das elektrisch angetriebene Pumpsystem (21) gesteuert wird, das ein elektrisches Steuersignal empfängt, derart, dass das Steuersignal eine elektrisch angetriebene Bewegung des Kolbenelements (29) in der Durchflusskammer (16) bewirkt
- wobei sich die Durchflusskammer (16) durch die Zylinderwand erstreckt, und wenn die verwendete Einspritzdüse in einer Zylinderwand eines großen, langsam laufenden Zweitaktmotors montiert ist, die Düse mittels der in der Zylinderwand angeordneten Durchflusskammer starr gehalten wird.

7. Verfahren nach Anspruch 6, wobei das elektrisch angetriebene Pumpsystem (21) eine Solenoidspule (23) und einen hin- und hergehenden Solenoidkolben (24) zum Antrieb durch die Solenoidspule (23) bei elektrischer Erregung der Solenoidspule (23) umfasst; wobei der Solenoidkolben (24) mit dem Kolbenelement (29) verbunden ist, um den Solenoidkolben (24) und das Kolbenelement (29) zusammen anzutreiben; wobei das Verfahren das Bewegen des Kolbenelements (29) durch den Solenoidkolben (24) in der Einspritzphase umfasst.

8. Verfahren nach Anspruch 6 oder 7, wobei die Einspritzdüse (4) eine Schmiermittelleitung (16') umfasst, die die Schmiermitteleinlassöffnung (12) mit der Düse (5) zum Strömen von Schmiermittel von der Einlassöffnung (12) zu der Düse (5) verbindet; wobei die Schmiermittelleitung (16') eine vordere Kammer (16B) nahe der Düse (5) und eine hintere Kammer (16A) entfernt von der Düse (5) umfasst, wobei die vordere Kammer (16B) das vorgegebene Schmiermittelvolumen enthält; wobei das Verfahren Verbinden der vorderen Kammer (16B) mit der hinteren Kammer (16A) zwischen Einspritzphasen und Bewirken eines Schmiermittelflusses von der hinteren Kammer (16A) zur vorderen Kammer (16B), um die vordere Kammer (16B) zu füllen, und Trennen der vorderen Kammer (16B) von der hinteren Kammer (16A) in der Einspritzphase umfasst, um einen Rückfluss von Schmiermittel aus der vorderen Kammer (16B) zu verhindern, wenn Schmiermittel in der vorderen Kammer (16B) aufgrund der Vorwärtsbewegung des Kolbenelements (29) unter Druck gesetzt und durch die Düsenöffnung (5') aus der vorderen Kammer (16B) ausgestoßen wird.

9. Verfahren nach Anspruch 8, wobei die Einspritzdüse (4) zum Trennen der vorderen Kammer (16B) von der hinteren Kammer (16A) in der Einspritzphase ein Rückschlagventil (34) zwischen der vorderen Kammer (16B) und der hinteren Kammer (16A) umfasst, wobei das Verfahren Schließen des Rückschlagventils (34) durch erhöhten Schmiermitteldruck auf die vordere Kammer (16B) während der Vorwärtsbewegung des Kolbenelements (29) und Öffnen des Ventils während der Rückwärtsbewegung des Kolbenelements (29) durch verringerten Schmiermitteldruck auf die vordere Kammer (16B) und dadurch Verbinden der vorderen Kammer (16B) für Fluidfluss mit der hinteren Kammer (16A) umfasst, um während der Rückwärtsbewegung des Kolbenelements (29) Schmiermittel aus der hinteren Kammer (16A) zu der vorderen Kammer zu saugen.

10. Verfahren nach Anspruch 8, wobei die Einspritzdüse (4) eine Buchse (33) umfasst, in der das Kolbenelement (29) verschiebbar angeordnet ist; wobei das Kolbenelement (29) eine Durchflussöffnung (31) umfasst, die zum hin- und hergehenden Gleiten in die Buchse (33) und aus dieser heraus konfiguriert ist und dadurch abwechselnd geschlossen und geöffnet wird, oder wobei die Buchse eine Durchflussöffnung (31) umfasst, die dazu konfiguriert ist, durch die Hin- und Herbewegung des Kolbenelements (29) in der Buchse (33) abwechselnd geschlossen und geöffnet zu werden; wobei die Durchflussöffnung (31) dazu konfiguriert ist, die vordere Kammer (16B) mit der hinteren Kammer (16A) zu verbinden, wenn sie für einen Schmiermittelfluss durch die Durchflussöffnung (31) von der hinteren Kammer (16A) zu der vorderen Kammer (16B) geöffnet ist, und dazu konfiguriert ist, die vordere Kammer (16B) von der hinteren Kammer (16A) zu trennen, wenn sie geschlossen ist, um einen Rückfluss von Schmiermittel aus der vorderen Kammer (16B) zu verhindern, wenn in der Einspritzphase Schmiermittel durch die Vorwärtsbewegung des Kolbenelements (29) durch die Düsenöffnung (5') aus der vorderen Kammer (16B) ausgestoßen wird;
wobei das Verfahren umfasst: in der Einspritzphase Vorwärtstreiben des Kolbenelements (29) in Richtung der Düse innerhalb der Buchse (33) und Schließen des Durchflusskanals zum Trennen der Durchflussverbindung zwischen der vorderen Kammer (16B) und der hinteren Kammer (16A); am Ende der Einspritzphase Bewirken eines Drucks in der vorderen Kammer (16B), der niedriger als in der hinteren Kammer ist, durch Zurückziehen des Kolbenelements (29) und dann Öffnen des Durchflusskanals (31) während des Zurückziehens und Bewirken eines Flusses von Schmiermittel aus der hinteren Kammer (16A) durch den Durchflusskanal (31) in die vordere Kammer (16B) aufgrund der Druckdifferenz.

11. Einspritzdüse für einen Motor nach einem der Ansprüche 1-5 oder für ein Verfahren nach einem der Ansprüche 6-10, wobei die Einspritzdüse (4) umfasst
- ein Gehäuse, wobei das Gehäuse eine Basis (13) umfasst, wobei die Basis (13) eine Schmiermitteleinlassöffnung (12) zum Aufnehmen von Schmiermittel von einer Schmiermittelzufuhrleitung (9) umfasst;
- eine Düse (5) mit einer Düsenöffnung (5') zum Einspritzen von Schmiermittel aus der Einlassöffnung (12) in einen Zylinder (1) eines Motors;
- ein Auslassventilsystem (15) zum Öffnen und Schließen für den Schmiermittelfluss zur Düsenöffnung (5') während eines Einspritzzyklus; wobei das Auslassventilsystem (15) zum Öffnen für einen Schmiermittelfluss zur Düsenöffnung (5') während einer Einspritzphase bei einem Druckanstieg über eine vorgegebene Grenze an dem Auslassventilsystem (15) und zum Schließen des Auslassventilsystems (15) nach der Einspritzphase konfiguriert ist;
- ein Pumpsystem zum Bewegen eines hin- und hergehenden Kolbenelements (29) in einer Einspritzphase, wobei das Kolbenelement (29) zum Einwirken auf ein vorgegebenes Schmiermittelvolumen innerhalb der Einspritzdüse (4) durch die Bewegung während der Einspritzphase, um einen Druckanstieg in dem Schmiermittel des vorgegebenen Schmiermittelvolumens zu bewirken, und zum Pumpen dieses Schmiermittels durch das Auslassventilsystem (15) und die Düsenöffnung (5') in den Zylinder (1) konfiguriert ist;
wobei das Pumpsystem im Inneren der Einspritzdüse ein elektrisch angetriebenes Pumpsystem (21) ist, das elektrisch mit der Steuereinrichtung (11) verbunden ist, um ein elektrisches Steuersignal zu empfangen, und wobei das Pumpsystem dazu konfiguriert ist, als Ergebnis des Steuersignals in einer Einspritzphase eine elektrisch angetriebene Bewegung des Kolbenelements (29) zu bewirken; wobei das Gehäuse eine Durchflusskammer (16) umfasst, die die Basis (13) starr mit der Düse (5) verbindet, wobei die Durchflusskammer (16) hohl ist, damit Schmiermittel innerhalb der Durchflusskammer (16) von der Basis (13) zu der Düse (5) fließt, wobei sich die Durchflusskammer (16) durch die Zylinderwand (3) des Motors erstreckt, um die Düse (5) mittels der Durchflusskammer (16) starr innerhalb des Zylinders (1) zu halten;
**dadurch gekennzeichnet, dass**
- die Einspritzdüse nur eine Düse (5) umfasst, die so konfiguriert ist, dass sie innerhalb der Zylinderwand (3) angeordnet ist, wenn sich die Durchflusskammer (16) durch die Zylinderwand (3) erstreckt;
- das Auslassventilsystem (15) ein Rückschlagventil in der Düse (5) umfasst; und
- das Kolbenelement (29) in der Durchflusskammer (16) bereitgestellt ist
- die Bewegung des Kolbenelements (29) innerhalb der Einspritzdüse durch das elektrisch angetriebene Pumpsystem (21) gesteuert wird, das ein elektrisches Steuersignal empfängt, derart, dass das Steuersignal eine elektrisch angetriebene Bewegung des Kolbenelements (29) in der Durchflusskammer (16) bewirkt
- wobei sich die Durchflusskammer (16) durch die Zylinderwand erstreckt, und wenn die verwendete Einspritzdüse in einer Zylinderwand eines großen, langsam laufenden Zweitaktmotors montiert ist, die Düse mittels der in der Zylinderwand angeordneten Durchflusskammer starr gehalten wird.

12. Einspritzdüse nach Anspruch 11, wobei das elektrisch angetriebene Pumpsystem (21) eine Solenoidspule (23) und einen hin- und hergehenden Solenoidkolben (24) zum Antrieb durch die Solenoidspule (23) bei elektrischer Erregung der Solenoidspule (23) umfasst; wobei der Solenoidkolben mit dem Kolbenelement (29) verbunden ist, um den Solenoidkolben (24) und das Kolbenelement (29) zusammen anzutreiben.

13. Einspritzdüse nach Anspruch 11 oder 12, umfassend einen Einstellmechanismus (26') zum Einstellen der Bewegungslänge des Kolbenelements (29).

14. Einspritzdüse nach einem der Ansprüche 11-13, wobei die Einspritzdüse (4) eine Schmiermittelleitung (16') umfasst, die die Schmiermitteleinlassöffnung (12) mit der Düse (5) zum Strömen von Schmiermittel von der Einlassöffnung (12) zu der Düse (5) verbindet; wobei die Schmiermittelleitung (16') eine vordere Kammer (16B) nahe der Düse (5) und eine hintere Kammer (16A) entfernt von der Düse (5) umfasst, wobei die vordere Kammer (16B) das vorgegebene Schmiermittelvolumen enthält; wobei die Einspritzdüse (4) dazu konfiguriert ist, die vordere Kammer (16B) zwischen Einspritzphasen für einen Schmiermittelfluss von der hinteren Kammer (16A) zur vorderen Kammer (16B) mit der hinteren Kammer (16A) zu verbinden, und dazu konfiguriert ist, die vordere Kammer (16B) in der Einspritzphase von der hinteren Kammer (16A) zu trennen, um einen Rückfluss von Schmiermittel aus der vorderen Kammer (16B) zu verhindern, wenn Schmiermittel in der vorderen Kammer (16B) aufgrund der Vorwärtsbewegung des Kolbenelements (29) unter Druck gesetzt und durch die Düsenöffnung (5') aus der vorderen Kammer (16B) ausgestoßen wird.

15. Einspritzdüse nach Anspruch 14, wobei die Einspritzdüse (4) zum Trennen der vorderen Kammer (16B) von der hinteren Kammer (16A) in der Einspritzphase ein Rückschlagventil (34) zwischen der vorderen Kammer (16B) und der hinteren Kammer (16A) umfasst, wobei das Rückschlagventil (34) dazu konfiguriert ist, das Rückschlagventil (34) durch erhöhten Schmiermitteldruck auf die vordere Kammer (16B) während der Vorwärtsbewegung des Kolbenelements (29) zu schließen und das Ventil während der Rückwärtsbewegung des Kolbenelements (29) durch verringerten Schmiermitteldruck auf die vordere Kammer (16B) zu öffnen und dadurch die vordere Kammer (16B) für Fluidfluss mit der hinteren Kammer (16A) zu verbinden, um während der Rückwärtsbewegung des Kolbenelements (29) Schmiermittel aus der hinteren Kammer (16A) zu der vorderen Kammer zu saugen.

## Revendications

1. Gros moteur lent à deux temps comprenant un cylindre (1) avec un piston réciproque à l'intérieur et avec une pluralité d'injecteurs (4) répartis le long d'un périmètre du cylindre (1) pour l'injection de lubrifiant dans le cylindre (1) à diverses positions sur le périmètre ; le moteur comprenant en outre un dispositif de commande (11) pour commander la quantité et la synchronisation de l'injection de lubrifiant par au moins l'un des injecteurs (4) ;
dans lequel chaque injecteur (4) comprend
- un boîtier, le boîtier comprenant une base (13), la base (13) comprenant un orifice d'entrée de lubrifiant (12) pour recevoir du lubrifiant depuis un conduit d'alimentation en lubrifiant (9) ;
- une buse (5) avec une ouverture de buse (5') s'étendant dans le cylindre (1) pour injecter du lubrifiant depuis l'orifice d'entrée (12) dans un cylindre (1) ;
- un système de soupape de sortie (15) pour s'ouvrir et se fermer pour l'écoulement de lubrifiant vers l'ouverture de buse (5') pendant un cycle d'injection ; le système de soupape de sortie (15) étant conçu pour s'ouvrir pour un écoulement de lubrifiant vers l'ouverture de buse (5') pendant une phase d'injection lors d'une augmentation de pression au-dessus d'une limite prédéterminée au niveau du système de soupape de sortie (15) et pour fermer le système de soupape de sortie (15) après la phase d'injection ;
- un système de pompage pour déplacer un élément plongeur réciproque (29) dans une phase d'injection, l'élément plongeur (29) étant conçu pour agir sur un volume de lubrifiant prédéterminé à l'intérieur de l'injecteur (4) par le mouvement pendant la phase d'injection pour provoquer une montée en pression dans le lubrifiant du volume de lubrifiant prédéterminé et pour pomper ce lubrifiant à travers le système de soupape de sortie (15) et l'ouverture de buse (5') dans le cylindre (1) ;
dans lequel le système de pompage à l'intérieur de l'injecteur est un système de pompage à entraînement électrique (21) qui est électriquement connecté au dispositif de commande (11) pour recevoir un signal de commande électrique et dans lequel le système de pompage est conçu à la suite du signal de commande provoquant un mouvement à entraînement électrique de l'élément plongeur (29) dans une phase d'injection ;
dans lequel le boîtier comprend une chambre d'écoulement (16) qui relie rigidement la base (13) à la buse (5), la chambre d'écoulement (16) étant creuse pour un écoulement de lubrifiant à l'intérieur de la chambre d'écoulement (16) de la base (13) à la buse (5), la chambre d'écoulement (16) s'étendant à travers la paroi de cylindre (3) du moteur pour maintenir la buse (5) rigidement à l'intérieur du cylindre (1) par la chambre d'écoulement (16) ;
**caractérisé en ce que**
l'injecteur comprend une seule buse (5), qui est située à l'intérieur de la paroi de cylindre (3) ;
- chaque injecteur n'est relié qu'à un seul conduit d'alimentation en lubrifiant, et relié électriquement au dispositif de commande,
- le système de soupape de sortie (15) comprend un clapet anti-retour dans la buse (5) ; et
- l'élément plongeur (29) est prévu dans la chambre d'écoulement (16), où le mouvement de l'élément plongeur dans la chambre d'écoulement augmente la pression d'injection du lubrifiant, et où
- le mouvement de l'élément plongeur (29) à l'intérieur de l'injecteur est commandé par le système de pompage à entraînement électrique (21), qui reçoit un signal de commande électrique de sorte que le signal de commande provoque le mouvement à entraînement électrique de l'élément plongeur (29) à l'intérieur de la chambre d'écoulement (16)
- où ladite chambre d'écoulement (16) s'étend à travers la paroi du cylindre, et lorsque l'injecteur est monté dans une paroi de cylindre d'un gros moteur lent à deux temps, la buse est maintenue rigidement par la chambre d'écoulement agencée dans la paroi de cylindre.

2. Moteur selon la revendication 1, dans lequel le système de pompage à entraînement électrique (21) comprend une bobine de solénoïde (23) et un plongeur de solénoïde réciproque (24) pour être entraîné par la bobine de solénoïde (23) lors de l'excitation électrique de la bobine de solénoïde (23) ; dans lequel le plongeur de solénoïde est connecté à l'élément plongeur (29) pour entraîner ensemble le plongeur de solénoïde (24) et l'élément plongeur (29).

3. Moteur selon la revendication 1 ou 2, dans lequel l'injecteur (4) comprend un conduit de lubrifiant (16') reliant l'orifice d'entrée de lubrifiant (12) à la buse (5) pour l'écoulement de lubrifiant depuis l'orifice d'entrée (12) à la buse (5) ; dans lequel le conduit de lubrifiant (16') comprend une chambre avant (16B) près de la buse (5) et une chambre arrière (16A) éloignée de la buse (5), la chambre avant (16B) contenant le volume de lubrifiant prédéterminé ; dans lequel l'injecteur (4) est conçu pour relier la chambre avant (16B) à la chambre arrière (16A) entre des phases d'injection pour l'écoulement de lubrifiant de la chambre arrière (16A) à la chambre avant (16B) et conçu pour déconnecter la chambre avant (16B) de la chambre arrière (16A) dans la phase d'injection pour empêcher le reflux de lubrifiant de la chambre avant (16B) lorsque le lubrifiant est pressurisé dans la chambre avant (16B) et expulsé de la chambre avant (16B) à travers l'ouverture de buse (5') par le mouvement vers l'avant de l'élément plongeur (29) .

4. Moteur selon la revendication 3, dans lequel l'injecteur (4), pour déconnecter la chambre avant (16B) de la chambre arrière (16A) dans la phase d'injection, comprend un clapet anti-retour (34) entre la chambre avant (16B) et la chambre arrière (16A), dans lequel le clapet anti-retour (34) est conçu pour fermer le clapet anti-retour (34) par une pression de lubrifiant élevée dans la chambre avant (16B) pendant le mouvement vers l'avant de l'élément plongeur (29) et pour ouvrir la soupape pendant le mouvement vers l'arrière de l'élément plongeur (29) par une pression de lubrifiant réduite sur la chambre avant (16B), et ainsi un écoulement de fluide reliant la chambre avant (16B) à la chambre arrière (16A) pour l'aspiration de lubrifiant de la chambre arrière (16A) à la chambre avant pendant le mouvement vers l'arrière de l'élément plongeur (29).

5. Moteur selon la revendication 3, dans lequel l'injecteur (4), pour déconnecter la chambre avant (16B) de la chambre arrière (16A) dans la phase d'injection, comprend une douille (33) dans lequel l'élément plongeur (29) est agencé de manière coulissante ; dans lequel l'élément plongeur (29) comprend une ouverture d'écoulement (31) conçue pour un coulissement réciproque dans et hors de la douille (33) et étant ainsi alternativement fermée et ouverte, ou dans lequel la douille comprend une ouverture d'écoulement (31) conçue pour être alternativement fermée et ouverte par le mouvement de va-et-vient de l'élément plongeur (29) dans la douille (33) ; dans lequel l'ouverture d'écoulement (31) est conçue pour relier la chambre avant (16B) à la chambre arrière (16A) lorsqu'elle est ouverte pour un écoulement de lubrifiant à travers l'ouverture d'écoulement (31) de la chambre arrière (16A) à la chambre avant (16B), et conçue pour déconnecter la chambre avant (16B) de la chambre arrière (16A) lorsqu'elle est fermée pour empêcher le reflux de lubrifiant de la chambre avant (16B) lorsque le lubrifiant est expulsé de la chambre avant (16B) à travers l'ouverture de buse (5') par le mouvement vers l'avant de l'élément plongeur (29) en phase d'injection.

6. Procédé de lubrification d'un gros moteur lent à deux temps comprenant un cylindre (1) avec un piston réciproque à l'intérieur et avec une pluralité d'injecteurs (4) répartis le long d'un périmètre du cylindre (1) pour l'injection de lubrifiant dans le cylindre (1) à diverses positions sur le périmètre ; le moteur comprenant en outre un dispositif de commande (11) commandant la quantité et la synchronisation de l'injection de lubrifiant par au moins l'un des injecteurs ; dans lequel chaque injecteur (4) comprend
- un boîtier, le boîtier comprenant une base (13), la base (13) comprenant un orifice d'entrée de lubrifiant (12) pour recevoir du lubrifiant depuis un conduit d'alimentation en lubrifiant (9) ;
- une buse (5) avec une ouverture de buse (5') s'étendant dans le cylindre (1) pour injecter du lubrifiant depuis l'orifice d'entrée (12) dans un cylindre (1) ;
- un système de soupape de sortie (15) pour s'ouvrir et se fermer pour l'écoulement de lubrifiant vers l'ouverture de buse (5') pendant un cycle d'injection ; le système de soupape de sortie (15) étant conçu pour s'ouvrir pour un écoulement de lubrifiant vers l'ouverture de buse (5') pendant une phase d'injection lors d'une augmentation de pression au-dessus d'une limite prédéterminée au niveau du système de soupape de sortie (15) et pour fermer le système de soupape de sortie (15) après la phase d'injection ;
- un système de pompage pour déplacer un élément plongeur réciproque (29) dans une phase d'injection, l'élément plongeur (29) étant conçu pour agir sur un volume de lubrifiant prédéterminé à l'intérieur de l'injecteur (4) par le mouvement pendant la phase d'injection pour provoquer une montée en pression dans le lubrifiant du volume de lubrifiant prédéterminé et pour pomper ce lubrifiant à travers le système de soupape de sortie (15) et l'ouverture de buse (5') dans le cylindre (1) ;
dans lequel le système de pompage à l'intérieur de l'injecteur est un système de pompage à entraînement électrique (21) qui est électriquement connecté au dispositif de commande (11) pour recevoir un signal de commande électrique et dans lequel le système de pompage est conçu à la suite du signal de commande provoquant un mouvement à entraînement électrique de l'élément plongeur (29) dans une phase d'injection ;
le procédé comprenant, de la part du système de pompage (21), la réception d'un signal de commande électrique du dispositif de commande (11), et en conséquence, le démarrage d'une phase d'injection en déplaçant l'élément plongeur réciproque (29), et le fait de provoquer une montée en pression dans un volume de lubrifiant prédéterminé à l'intérieur de l'injecteur (4), et par la montée en pression, le pompage de ce volume de lubrifiant prédéterminé à travers le système de soupape de sortie (15) et l'ouverture de buse (5') dans le cylindre (1) ; en fin de phase d'injection, la rétractation de l'élément plongeur (29) et le fait de provoquer la fermeture du système de soupape de sortie (15) ; dans lequel le logement comprend une chambre d'écoulement (16) qui relie rigidement la base (13) à la buse (5), la chambre d'écoulement (16) étant creuse pour un écoulement de lubrifiant à l'intérieur de la chambre d'écoulement (16) de la base (13) à la buse (5), la chambre d'écoulement (16) s'étendant à travers la paroi de cylindre (3) du moteur pour maintenir rigidement la buse (5) à l'intérieur du cylindre (1) par la chambre d'écoulement (16) ;
**caractérisé en ce que**
- l'injecteur comprend une seule buse (5), qui est située à l'intérieur de la paroi de cylindre (3) ;
- le système de soupape de sortie (15) comprend un clapet anti-retour dans la buse (5) ; et
- l'élément plongeur (29) est prévu dans la chambre d'écoulement (16)
- le mouvement de l'élément plongeur (29) à l'intérieur de l'injecteur est commandé par le système de pompage à entraînement électrique (21), qui reçoit un signal de commande électrique de sorte que le signal de commande provoque un mouvement à entraînement électrique de l'élément plongeur (29) à l'intérieur de la chambre d'écoulement (16)
- où ladite chambre d'écoulement (16) s'étend à travers la paroi du cylindre, et lorsque l'injecteur en utilisation est monté dans une paroi de cylindre d'un gros moteur lent à deux temps, la buse est maintenue rigidement par la chambre d'écoulement agencée dans la paroi de cylindre.

7. Procédé selon la revendication 6, dans lequel le système de pompage à entraînement électrique (21) comprend une bobine de solénoïde (23) et un plongeur de solénoïde réciproque (24) pour être entraîné par la bobine de solénoïde (23) lors de l'excitation électrique de la bobine de solénoïde (23) ; dans lequel le plongeur de solénoïde (24) est relié à l'élément plongeur (29) pour entraîner ensemble le plongeur de solénoïde (24) et l'élément plongeur (29) ; dans lequel le procédé comprend le déplacement de l'élément plongeur (29) par le plongeur de solénoïde (24) dans la phase d'injection.

8. Procédé selon la revendication 6 ou 7, dans lequel l'injecteur (4) comprend un conduit de lubrifiant (16') reliant l'orifice d'entrée de lubrifiant (12) à la buse (5) pour l'écoulement de lubrifiant depuis l'orifice d'entrée (12) à la buse (5) ; dans lequel le conduit de lubrifiant (16') comprend une chambre avant (16B) près de la buse (5) et une chambre arrière (16A) éloignée de la buse (5), la chambre avant (16B) contenant le volume de lubrifiant prédéterminé ; dans lequel le procédé comprend la liaison de la chambre avant (16B) avec la chambre arrière (16A) entre les phases d'injection et le fait de provoquer un écoulement de lubrifiant de la chambre arrière (16A) vers la chambre avant (16B) pour remplir la chambre avant (16B), et la déconnexion de la chambre avant (16B) de la chambre arrière (16A) dans la phase d'injection pour empêcher le reflux de lubrifiant de la chambre avant (16B) lorsque le lubrifiant est pressurisé dans la chambre avant (16B) et expulsé de la chambre avant (16B) à travers l'ouverture de buse (5') par le mouvement vers l'avant de l'élément plongeur (29).

9. Procédé selon la revendication 8, dans lequel l'injecteur (4), pour déconnecter la chambre avant (16B) de la chambre arrière (16A) en phase d'injection, comprend un clapet anti-retour (34) entre la chambre avant (16B) et la chambre arrière (16A), dans lequel le procédé comprend la fermeture du clapet anti-retour (34) par une pression de lubrifiant élevée dans la chambre avant (16B) pendant le mouvement vers l'avant de l'élément plongeur (29) et l'ouverture de la soupape pendant le mouvement vers l'arrière de l'élément plongeur (29) par une pression de lubrifiant réduite sur la chambre avant (16B), et ainsi un écoulement de fluide reliant la chambre avant (16B) à la chambre arrière (16A) pour l'aspiration de lubrifiant de la chambre arrière (16A) vers la chambre avant pendant le mouvement vers l'arrière de l'élément plongeur (29).

10. Procédé selon la revendication 8, dans lequel l'injecteur (4) comprend une douille (33) dans laquelle l'élément plongeur (29) est agencé de manière coulissante ; dans lequel l'élément plongeur (29) comprend une ouverture d'écoulement (31) conçue pour un coulissement réciproque dans et hors de la douille (33) et étant ainsi alternativement fermée et ouverte, ou dans lequel la douille comprend une ouverture d'écoulement (31) conçue pour être alternativement fermée et ouverte par le mouvement de va-et-vient de l'élément plongeur (29) dans la douille (33) ; dans lequel l'ouverture d'écoulement (31) est conçue pour relier la chambre avant (16B) à la chambre arrière (16A) lorsqu'elle est ouverte pour un écoulement de lubrifiant à travers l'ouverture d'écoulement (31) de la chambre arrière (16A) à la chambre avant (16B), et conçue pour déconnecter la chambre avant (16B) de la chambre arrière (16A) lorsqu'elle est fermée pour empêcher le reflux de lubrifiant de la chambre avant (16B) lorsque le lubrifiant est expulsé de la chambre avant (16B) à travers l'ouverture de buse (5') par le mouvement vers l'avant de l'élément plongeur (29) en phase d'injection ;
dans lequel le procédé comprend, dans la phase d'injection, l'entraînement de l'élément plongeur (29) vers l'avant vers la buse à l'intérieur de la douille (33) et la fermeture du passage d'écoulement pour déconnecter la communication d'écoulement entre la chambre avant (16B) et la chambre arrière (16A) ; à la fin de la phase d'injection, le fait de provoquer une pression dans la chambre avant (16B) plus faible que dans la chambre arrière en rétractant l'élément plongeur (29), puis en ouvrant le passage d'écoulement (31) lors de la rétraction et le fait de provoquer l'écoulement de lubrifiant de la chambre arrière (16A) à travers le passage d'écoulement (31) dans la chambre avant (16B) en raison de la différence de pression.

11. Injecteur pour un moteur selon l'une quelconque des revendications 1 à 5 ou pour un procédé selon l'une quelconque des revendications 6 à 10, dans lequel l'injecteur (4) comprend
- un boîtier, le boîtier comprenant une base (13), la base (13) comprenant un orifice d'entrée de lubrifiant (12) pour recevoir du lubrifiant depuis un conduit d'alimentation en lubrifiant (9) ;
- une buse (5) avec une ouverture de buse (5') pour injecter du lubrifiant depuis l'orifice d'entrée (12) dans un cylindre (1) d'un moteur ;
- un système de soupape de sortie (15) pour s'ouvrir et se fermer pour l'écoulement de lubrifiant vers l'ouverture de buse (5') pendant un cycle d'injection ; le système de soupape de sortie (15) étant conçu pour s'ouvrir pour un écoulement de lubrifiant vers l'ouverture de buse (5') pendant une phase d'injection lors d'une augmentation de pression au-dessus d'une limite prédéterminée au niveau du système de soupape de sortie (15) et pour fermer le système de soupape de sortie (15) après la phase d'injection ;
- un système de pompage pour déplacer un élément plongeur réciproque (29) dans une phase d'injection, l'élément plongeur (29) étant conçu pour agir sur un volume de lubrifiant prédéterminé à l'intérieur de l'injecteur (4) par le mouvement pendant la phase d'injection pour provoquer une montée en pression dans le lubrifiant du volume de lubrifiant prédéterminé et pour pomper ce lubrifiant à travers le système de soupape de sortie (15) et l'ouverture de buse (5') dans le cylindre (1) ;
dans lequel le système de pompage à l'intérieur de l'injecteur est un système de pompage à entraînement électrique (21) qui est électriquement connecté au dispositif de commande (11) pour recevoir un signal de commande électrique et dans lequel le système de pompage est conçu à la suite du signal de commande provoquant un mouvement à entraînement électrique de l'élément plongeur (29) dans une phase d'injection, dans lequel le boîtier comprend une chambre d'écoulement (16) qui relie rigidement la base (13) à la buse (5), la chambre d'écoulement (16) étant creuse pour un écoulement de lubrifiant à l'intérieur de la chambre d'écoulement (16) de la base (13) à la buse (5), la chambre d'écoulement (16) s'étendant à travers la paroi de cylindre (3) du moteur pour maintenir rigidement la buse (5) à l'intérieur du cylindre (1) par la chambre d'écoulement (16) ;
**caractérisé en ce que**
- l'injecteur comprend une seule buse (5) conçue pour être située à l'intérieur de la paroi de cylindre (3) lorsque la chambre d'écoulement (16) s'étend à travers la paroi de cylindre (3) ;
- le système de soupape de sortie (15) comprend un clapet anti-retour dans la buse (5) ; et
- l'élément plongeur (29) est prévu dans la chambre d'écoulement (16)
- le mouvement de l'élément plongeur (29) à l'intérieur de l'injecteur est commandé par le système de pompage à entraînement électrique (21), qui reçoit un signal de commande électrique de sorte que le signal de commande provoque un mouvement à entraînement électrique de l'élément plongeur (29) à l'intérieur de la chambre d'écoulement (16)
- où ladite chambre d'écoulement (16) s'étend à travers la paroi du cylindre, et lorsque l'injecteur en utilisation est monté dans une paroi de cylindre d'un gros moteur lent à deux temps, la buse est maintenue rigidement par la chambre d'écoulement agencée dans la paroi de cylindre.

12. Injecteur selon la revendication 11, dans lequel le système de pompage à entraînement électrique (21) comprend une bobine de solénoïde (23) et un plongeur de solénoïde réciproque (24) pour être entraîné par la bobine de solénoïde (23) lors de l'excitation électrique de la bobine de solénoïde (23) ; dans lequel le plongeur de solénoïde est connecté à l'élément plongeur (29) pour entraîner ensemble le plongeur de solénoïde (24) et l'élément plongeur (29).

13. Injecteur selon la revendication 11 ou 12, comprenant un mécanisme de réglage (26') pour régler la longueur de mouvement de l'élément plongeur (29).

14. Injecteur selon l'une quelconque des revendications 11 à 13, dans lequel l'injecteur (4) comprend un conduit de lubrifiant (16') reliant l'orifice d'entrée de lubrifiant (12) à la buse (5) pour l'écoulement de lubrifiant depuis l'orifice d'entrée (12) à la buse (5) ; dans lequel le conduit de lubrifiant (16') comprend une chambre avant (16B) près de la buse (5) et une chambre arrière (16A) éloignée de la buse (5), la chambre avant (16B) contenant le volume de lubrifiant prédéterminé ; dans lequel l'injecteur (4) est conçu pour relier la chambre avant (16B) à la chambre arrière (16A) entre des phases d'injection pour l'écoulement de lubrifiant de la chambre arrière (16A) à la chambre avant (16B) et conçu pour déconnecter la chambre avant (16B) de la chambre arrière (16A) dans la phase d'injection pour empêcher le reflux de lubrifiant de la chambre avant (16B) lorsque le lubrifiant est pressurisé dans la chambre avant (16B) et expulsé de la chambre avant (16B) à travers l'ouverture de buse (5') par le mouvement vers l'avant de l'élément plongeur (29).

15. Injecteur selon la revendication 14, dans lequel l'injecteur (4), pour déconnecter la chambre avant (16B) de la chambre arrière (16A) dans la phase d'injection, comprend un clapet anti-retour (34) entre la chambre avant (16B) et la chambre arrière (16A), dans lequel le clapet anti-retour (34) est conçu pour fermer le clapet anti-retour (34) par une pression de lubrifiant élevée dans la chambre avant (16B) pendant le mouvement vers l'avant de l'élément plongeur (29) et pour ouvrir la soupape pendant le mouvement vers l'arrière de l'élément plongeur (29) par une pression de lubrifiant réduite sur la chambre avant (16B), et ainsi un écoulement de fluide reliant la chambre avant (16B) à la chambre arrière (16A) pour l'aspiration de lubrifiant de la chambre arrière (16A) à la chambre avant pendant le mouvement vers l'arrière de l'élément plongeur (29).
